# FASCICULE DE BREVET EUROPEEN

(11) **EP 2 483 994 B1**
(45) Date de publication et mention de la délivrance du brevet: **01.01.2014**
(21) Numéro de dépôt: 10776768.3
(22) Date de dépôt: 30.09.2010
(51) Int. Cl.: H02K 5/20, H02K 11/04, H02K 5/22

(54) **MACHINE ELECTRIQUE TOURNANTE POLYPHASEE A CAPOT DE PROTECTION, NOTAMMENT ALTERNATEUR POUR VEHICULE AUTOMOBILE**
ROTIERENDE MEHRPHASIGE ELEKTRISCHE MASCHINE MIT EINER SCHUTZABDECKUNG, INSBESONDERE FÜR EIN KRAFTFAHRZEUG
MULTIPHASE ROTARY ELECTRIC MACHINE INCLUDING A PROTECTIVE COVER, IN PARTICULAR A MOTOR VEHICLE ALTERNATOR

(30) Priorité: 30.09.2009 FR 0956801
(43) Date de publication de la demande: 08.08.2012
(73) Titulaire: Valeo Equipements Electriques Moteur, 94046 Créteil Cedex (FR)
(72) Inventeur: LEROY, Virginie, F-93330 Neuilly Sur Marne (FR); TARRAGO, Jean-Luc, F-94440 Villecresnes (FR); FAKES, Michel, F-59113 Seclin (FR); FOVEAU, Vincent, F-75012 Paris (FR)
(86) Numéro de dépôt international: PCT/FR2010/052060
(87) Numéro de publication internationale: WO 2011/039480

(56) Documents cités:
- EP-A1- 2 091 136
- DE-A1- 10 007 903
- JP-A- 2008 228 488
- US-A- 6 150 196
- US-B1- 6 429 556

## Description

### Domaine de l'invention

L'invention concerne une machine électrique tournante polyphasée, notamment un alternateur pour véhicule automobile, du type comprenant un carter abritant un stator comprenant un bobinage de stator à plusieurs sorties de phase, un palier appartenant au carter et comportant un plateau ajouré muni d'ouvertures de sortie de phase, un dissipateur de chaleur en forme de plaque solidaire du palier et portant des premiers éléments de redressement de courant, tels que des diodes, des seconds éléments de redressement de courant, tels que des diodes, portés par le plateau du palier, un connecteur intercalé entre le dissipateur et le plateau et un capot de protection coiffant les sorties des phases ainsi que le connecteur et le dissipateur.

### Etat de la technique

Un tel agencement et une telle machine polyphasée sont décrits dans les documents WO 02/29958, WO 02/093717, EP 2 091 136 et JP 2008-228488.

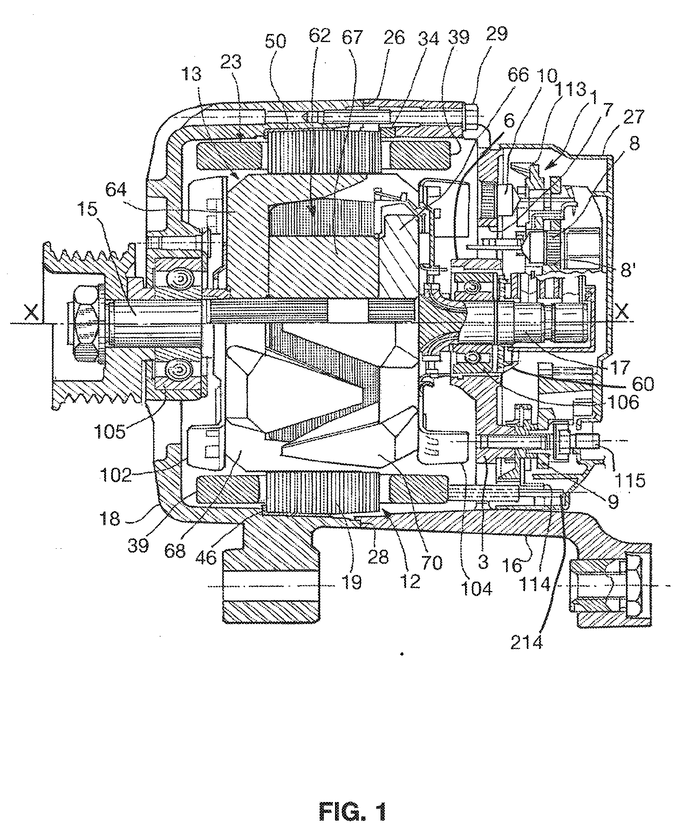

Pour plus de précisions on se reportera à ces documents et à la figure 1, qui est une vue en coupe axiale identique à la figure 3 du document WO 02/093717 et à la figure 7 du document WO 02/029958, d'une machine électrique tournante sous la forme d'un alternateur polyphasé à ventilation interne équipé d'un agencement de redressement de courant 1 et d'au moins un ventilateur interne 102, 104 de refroidissement de l'alternateur. L'agencement 1 comporte un connecteur 113 intercalé entre un dissipateur de chaleur 9 métallique, appelé dissipateur de chaleur positif, qui porte une première pluralité d'éléments de redressement de courant, ici des diodes 8 dites diodes positives, et un élément de support 3 métallique, qui porte une deuxième pluralité d'élément de redressement de courant, ici des diodes 10 dites diodes négatives.
Un ensemble régulateur de tension- porte balais, représenté partiellement, est implanté entre les extrémités circonférentielles du dissipateur 9 comme visible à la figure 1 du document WO 02/093717.

La machine comporte un axe X-X de rotation, un arbre central 15, un rotor 13 solidaire de l'arbre 15, un stator 12 entourant le rotor 13, un carter portant le stator et centralement à rotation l'arbre 15, dont l'axe de symétrie axiale est confondu avec l'axe X-X et un capot 27 de protection ajouré, qui coiffe l'agencement 1 et l'ensemble 116.
Le carter comprend au moins deux flasques 16, 18, appelés respectivement palier avant et palier arrière.
Le rotor 13 et le stator 12 sont montés à l'intérieur du carter 16, 18. Le stator 12, abrité par le carter 16, 18, comporte un corps de stator 19 portant un bobinage de stator 23 dont les extrémités, appelées chignons 39, s'étendent en saillie axiale de part et d'autre du corps 19.

Les paliers 16, 18 sont ici globalement de forme annulaire et creuse. Ils comportent chacun un fond en forme de plateau d'orientation transversale par rapport à l'axe X-X et à leur périphérie externe un rebord annulaire globalement d'orientation axiale par rapport à l'axe X-X. Les rebords comportent chacun une face radiale annulaire d'extrémité libre usinée concernée 26, 28 délimitant un plan de joint. Les paliers 16, 18 sont reliés ici entre eux par des vis de fixation 29.

Chaque rebord se raccorde à la périphérie externe de son plateau comportant centralement un logement délimité par une âme cylindrique pour le montage de la bague externe d'un roulement à billes 105, 106.

Le roulement 105 est en contact avec l'âme du palier 18, tandis qu'une capsule 60 est intercalée radialement entre l'âme 6 du palier 16 et le roulement 106.
Les extrémités avant et arrière de l'arbre 15 sont emmanchées chacune dans la bague interne du roulement 105, 106 associé pour montage à rotation de l'arbre 15 et du rotor 13 portant ici un ventilateur interne 102, 104 à chacune de ses extrémités axiales.

Les balais de l'ensemble régulateur de tension-porte balais sont destinés à frotter sur deux bagues collectrices 17 fixées sur l'extrémité arrière de l'arbre 15 de plus petit diamètre, tandis qu'une poulie est solidaire de l'extrémité avant de l'arbre 15.
La poulie est destinée à recevoir une courroie faisant partie d'un dispositif de transmission de mouvement entraîné par le moteur à combustion interne du véhicule automobile. Chaque plateau et chaque rebord d'un palier 16, 18 comporte respectivement des ouvertures d'entrée d'air et des ouvertures de sortie d'air pour la circulation interne d'un fluide de refroidissement, ici de l'air. Cette circulation d'air est réalisée à l'aide des ventilateurs 102, 104 et permet de refroidir l'agencement 1, l'ensemble 116, les roulements 105, 106 et les chignons 39 du stator 12 implantés au dessus des ventilateurs 102, 104 dotés de pales.
Les paliers 16, 18 sont métallique et donc électriquement conducteurs en étant en matière moulable, ici en aluminium. Ils sont destinés à être fixés sur une partie fixe liée à la masse du véhicule automobile reliée à la borne négative de la batterie.

Le corps 19 du stator 12 est constitué par un empilement axial de tôles transversales, qui comportent chacune des encoches axialement alignées, qui débouchent à la périphérie interne du corps 19 et reçoivent des brins axiaux électriquement conducteurs du bobinage 23 avec intercalation d'un isolant d'encoche.

Le bobinage électrique 23 est, pour chaque phase de l'alternateur, constitué par exemple par l'enroulement en spires d'un fil électriquement conducteur revêtu d'un isolant électrique.

Le bobinage 23 comporte dans chaque encoche du corps 19 un faisceau d'éléments électriquement conducteurs, qui traversent axialement les encoches et sont prolongés à l'extérieur du corps 19 par des brins de jonction qui forment les chignons 39.

En variante, il est fait appel à des épingles soudées montées dans les encoches du corps 19 comme dans les document WO-92/06527 et FR-A-2 819 117.

Dans tous les cas le corps 19 porte des enroulements constituant le bobinage 23. Ces enroulements de stator appartiennent aux phases de l'alternateur. Chaque phase comporte un ou deux enroulements. Les sorties 214 de ces enroulements de phase, par exemple connectées en étoile ou en triangle, sont reliées à fixation chacune au connecteur 113 de l'agencement 1 présentant pour ce faire des crochets de connexion 114.

Les crochets 114 présentent une portion d'enracinement pénétrant dans le corps en matière électriquement isolante du connecteur 113. Cette portion est prolongée par une portion de fixation de la sortie 214 concernée. La portion de fixation s'étend globalement perpendiculairement à la portion d'enracinement. Les crochets 114 sont globalement en forme d'équerre et sont implantés à la périphérie externe du connecteur 113 en étant saillant vers l'extérieur.

L'alternateur de la figure 1 est du type triphasé et comporte un enroulement par phase. Les trois sorties 214 de ces enroulements traversent à isolation électrique le plateau 3 du palier arrière 16 à la faveur d'une ouverture que présente le plateau 3 à sa périphérie externe. Ces trois sorties sont mieux visibles dans le document WO 02/29958, qui décrit également le montage élastique du corps 19 du stator 12 à l'aide d'un joint annulaire plat 46, de la résine thermoconductrice 50 et des tampons 34.
Le rotor 13 est ici un rotor à griffes, qui comporte un bobinage électrique 62 cylindrique d'excitation, qui est porté par un noyau tubulaire 67 intercalé entre deux plateaux 64 et 66 comportant chacun des griffes 68 et 70 respectivement, qui sont décalées angulairement et qui présentent à leur périphérie externe des dents globalement de forme trapézoïdale s'étendant axialement en direction de l'autre plateau 66 et 64. Chaque plateau est fixé sur l'arbre 15 ici à la faveur de parties moletées de l'arbre, dont une sert à la fixation du noyau 67. Les bagues collectrices 17 sont reliées aux extrémités du bobinage 62 par des liaisons filaires passant derrière le ventilateur 104.
En variante, comme décrit dans le document FR 2905806, des aimants permanents sont intercalés entre deux griffes 68, 70 pour augmenter la puissance de la machine.

Dans cette figure 1, l'agencement 1 est fixé sur le palier arrière 16 et l'élément de support des diodes négatives est constitué par le plateau 3 du palier 16 constituant un dissipateur de chaleur appelé dissipateur de chaleur négatif.
L'agencement 1 comprend dans cet exemple trois paires de diodes positives 8 et négatives 10. Les diodes positives 8 sont portées par le dissipateur de chaleur 9 ici métallique. Ce dissipateur 9 est séparé du plateau 3 par le connecteur 113 en un matériau électriquement isolant, ici en matière plastique, surmoulé sur un ensemble de conducteurs électriques plats, localement apparents notamment au niveau des crochets 114 de fixation des sorties 214. Ce connecteur 113, grâce à ses conducteurs, forme, de manière connue, avec les diodes 10, 8 un pont redresseur de courant appartenant à l'agencement 1.

Le dissipateur 9 et le connecteur 113, globalement en forme de plaque, sont axialement juxtaposées et fixés à isolation électrique par des goujons à écrou 115 au plateau 3 du palier 16.

Le connecteur 113 est en contact localement avec des surépaisseurs, ici des cheminées, à trous taraudés du plateau 3 prévus pour le vissage des goujons 115.

Le capot 27, en matière électriquement isolante ici en matière plastique, est fixé par encliquetage sur une partie filetée des goujons 115 comme décrit dans le document WO 01/69762.

Ce dissipateur 9 est électriquement conducteur en étant pourvu d'ouvertures axiales et d'ailettes pour le refroidissement des diodes 8, qui sont plus chaudes que les diodes 10.

Le connecteur 113 est configuré pour autoriser un libre passage de l'air en dessous des ouvertures axiales du dissipateur 9 en correspondance avec les ouvertures d'entrée d'air 7 du palier 16.

Pour mémoire on rappellera que lorsque le rotor 13 tourne et qu'un courant électrique circule dans le bobinage inducteur d'excitation 62, ce rotor est magnétisé et qu'il se produit un courant alternatif induit dans les enroulements du stator 12. L'agencement de redressement de courant 1 permet de redresser le courant alternatif induit dans les enroulements du bobinage 23 du stator en courant continu afin d'alimenter les consommateurs et de recharger la batterie du véhicule automobile.
Le régulateur de tension agit sur le bobinage 62 pour limiter la tension afin de protéger les consommateurs.

Un flux d'air, engendré par la rotation notamment du ventilateur 104 traverse les ouvertures axiales du dissipateur de chaleur positif 9 et les ouvertures d'entrée d'air 7 du plateau 3 pour refroidir l'agencement 1.
Cette disposition donne satisfaction.

Il en est de même des dispositions décrites dans le document EP 2 091 136 qui conduisent à augmenter l'épaisseur du plateau du palier concerné du carter pour créer une surépaisseur afin de mieux évacuer la chaleur et ce en combinaison avec au moins une saillie d'évacuation de la chaleur reliée à la surépaisseur.

Dans le document JP 20086228488 on évacue bien la chaleur en créant un dissipateur de chaleur en forme de portion d'anneau avec des cloisons reliant la périphérie interne en forme d'anneau du dissipateur à la périphérie externe en forme d'anneau du dissipateur.

Néanmoins dans certains cas de l'eau, notamment salée, ou tout autre souillure peut pénétrer au niveau des sorties des phases et de l'ensemble connecteur-dissipateur.

Pour palier cet inconvénient on peut songer à créer des aménagements d'isolement autour de chaque sortie de phase à la faveur d'un prolongement du connecteur et du capot qui sont en appui l'un contre l'autre et qui traversent une ouverture une ouverture du plateau comme décrit dans le document FR 2 734 426.

Cette solution donne satisfaction.

Néanmoins il peut être souhaitable de simplifier le connecteur tout en bénéficiant d'un bon aménagement d'isolement.

### Objet de l'invention

La présente invention a pour but de répondre à ce souhait et donc de simplifier le connecteur tout en bénéficiant d'un bon aménagement d'isolement.

Pour atteindre ce but, une machine électrique tournante polyphasée du type sus indiquée et selon la revendication 1 comportant un capot en matière électriquement isolante et un dissipateur électriquement conducteur, par exemple métallique, est caractérisée en ce que l'ensemble dissipateur de chaleur-connecteur présente à sa périphérie externe des pans munis chacun d'un crochet de fixation d'une sortie de phase, en ce que le capot présente intérieurement des cloisons internes qui épousent la forme des pans et en ce que chaque cloison interne s'étend dans l'espace délimité par la portion de fixation d'un crochet et le pan concerné de l'ensemble dissipateur-connecteur et en ce que le connecteur comprend en outre sur sa périphérie interne des autres crochets dégagés ayant globalement une forme d'équerre, ladite périphérie interne du connecteur a une forme sinusoïdale entre une extrémité du connecteur et le crochet le plus éloigné de ladite extrémité parmi lesdits autres crochets dégagés de la périphérie interne.

Grâce à l'invention le connecteur est simplifié car il est dépourvu de prolongement pénétrant dans une ouverture du plateau.

En outre chaque cloison interne épouse la forme de son pan associé et réalise une isolation électrique entre le crochet et le dissipateur.

Cette cloison interne est plus large circonférentiellement qu'un crochet et déborde de part et d'autre de celui-ci.

De plus les cloisons internes permettent de canaliser le passage de l'air.

Selon d'autres caractéristiques, présentant d'autres avantages, prises isolément ou en combinaison :
- les pans sont globalement rectilignes ;
- le capot est en matière plastique ;
- le capot est de forme creuse et présente un fond prolongé à sa périphérie externe par une jupe globalement perpendiculaire au capot et dotée localement de bossages dans chacun desquels pénètre une sortie de phase ;
- les cloisons internes sont implantées à l'intérieur de la jupe chacune en vis-à-vis d'un bossage ;
- les cloisons internes sont moins hautes que la jupe ;
- les cloisons internes sont venues de moulage avec le fond du capot en matière plastique et s'étendent chacune en vis à vis d'un bossage ;
- les cloisons internes s'étendent globalement perpendiculairement au fond du capot ;
- les cloisons internes sont d'orientation globalement tangentielle ;
- deux cloisons internes sont reliées ensembles pour former un V ;
- les deux cloisons internes en forme de V sont implantées circonférentiellement entre deux pattes d'encliquetage du capot ;
- une patte d'encliquetage du capot est intercalée entre les deux cloisons internes en forme de V et une troisième cloison ;
- le capot présente une pluralité d'ouvertures de passage d'air et les cloisons internes sont implantées à l'extérieur des ouvertures et à l'intérieur de la jupe ;
- le connecteur présente à sa périphérie externe des saillies destinées à la fixation par encliquetage du capot présentant pour ce faire des pattes d'encliquetage pour coopérer chacune avec une saillie ;
- les pattes d'encliquetage du capot sont issues de la jupe du capot ;
- chaque pan du dissipateur comporte une paroi périphérique saillante implantée à la périphérie externe du dissipateur ;
- les premiers éléments de redressement de courant sont montés chacun à la périphérie interne du dissipateur et sont implantés chacun dans une cellule de refroidissement délimitée par une paroi périphérique saillante du dissipateur et latéralement par deux parois transversales saillantes s'étendant de la périphérie externe à la périphérie interne du dissipateur ;
- un couloir de passage d'air existe entre deux parois transversales en vis-à-vis de deux cellules consécutives ;
- les deux cloisons internes en forme de V canalisent le couloir de passage d'air entre deux cellules consécutives ;
- les cellules sont borgnes en étant ouvertes au niveau de la périphérie interne du dissipateur ;
- au moins une cellule est dotée à sa périphérie interne d'une ailette de refroidissement saillante par rapport à la périphérie interne du dissipateur ;
- l'une au moins des parois transversales est prolongée radialement vers l'intérieur à sa périphérie interne pour former une ailette interne de refroidissement ;
- chaque cellule comporte au moins un trou externe délimités par la périphérie interne de la paroi périphérique pour créer une continuité de matière entre le premier élément de redressement de courant et la paroi périphérique) ;
- au moins une ailette externe supplémentaire délimite latéralement un trou externe et s'étend en direction du premier élément de redressement de courant concerné ;
- il est prévu au moins une ailette interne supplémentaire à la périphérie interne de la cellule ;
- le dissipateur présente un nombre de trous d'accès à une borne de connexion électrique d'un second élément de redressement de courant inférieur au nombre de premiers éléments de redressement de courant ;
- le dissipateur est plus court circonférentiellement que le connecteur ;
- le connecteur présente trois bossages pour contact local avec la face inférieure du dissipateur et création d'un jeu entre les corps en forme de plaque du dissipateur et du connecteur ;
- la face inférieure du dissipateur est lisse ;
- les crochets de fixation sont en forme d'équerre ;
- au moins un crochet de fixation a une forme différente d'une équerre.

D'autres buts, caractéristiques, détails et avantages de l'invention apparaîtront plus clairement dans la description explicative qui va suivre faite en référence aux dessins schématiques annexés illustrant à titre d'exemple un mode de réalisation de l'invention.

### Brève description des dessins

- la figure 1 est une vue en coupe axiale d'une machine électrique tournante sous la forme d'un alternateur équipé d'un agencement de redressement selon l'art antérieur ;

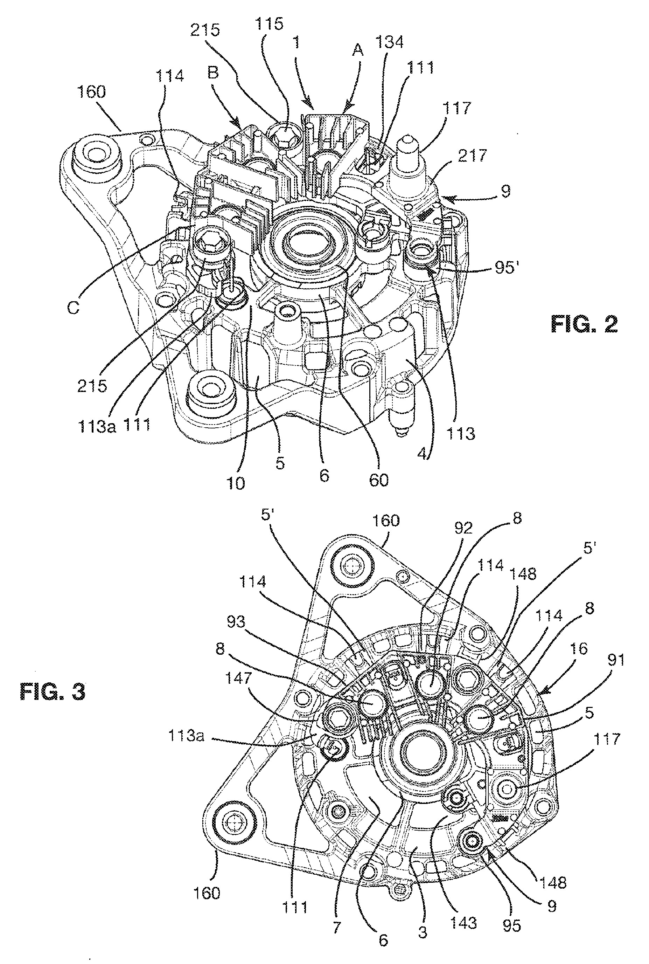

- la figure 2 est une vue en perspective d'un agencement de redressement selon l'invention, monté sur le palier arrière d'un alternateur pour véhicule automobile;
- la figure 3 est une vue de face de l'agencement de la figure 2;

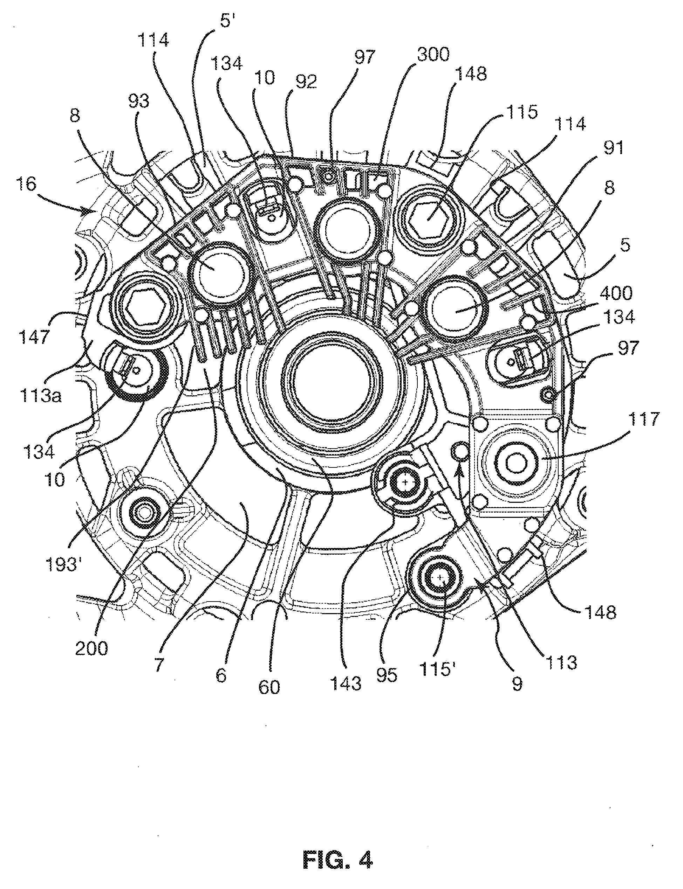

- la figure 4 est une vue partielle à plus grande échelle de l'agencement de redressement de la figure 3 ;

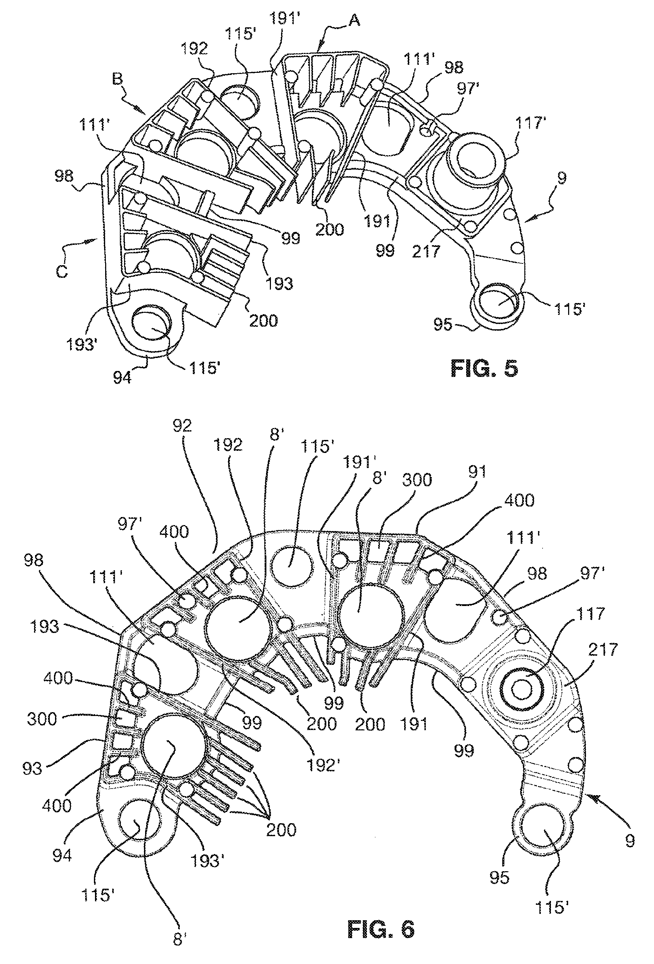

- la figure 5 est une vue en perspective du dissipateur de chaleur des figures 2 à 4 ;
- la figure 6 est une vue de face du dissipateur de chaleur de la figure 5 ;

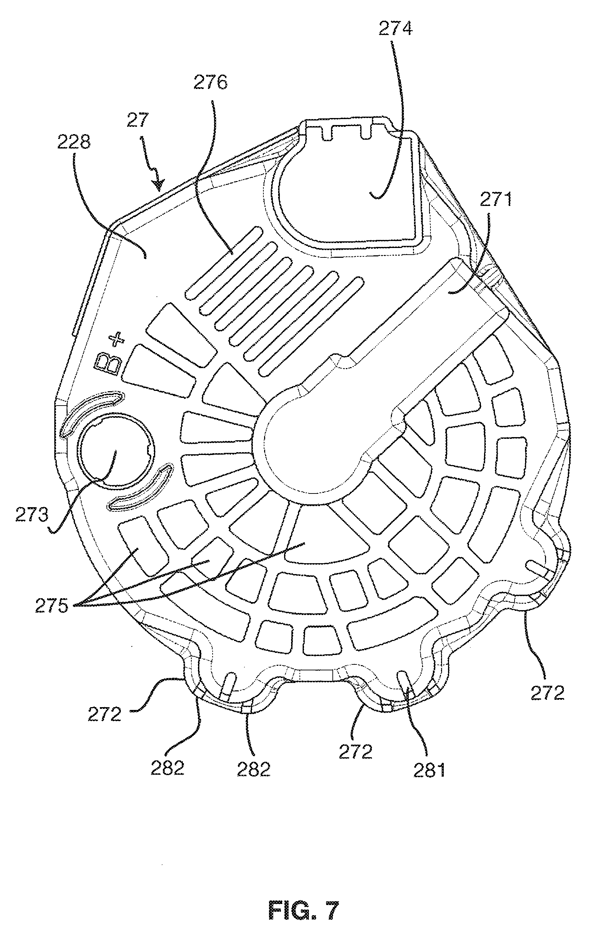

- la figure 7 est une vue de face du capot de protection de l'agencement de redressement de courant des figures 2 à 6 ;

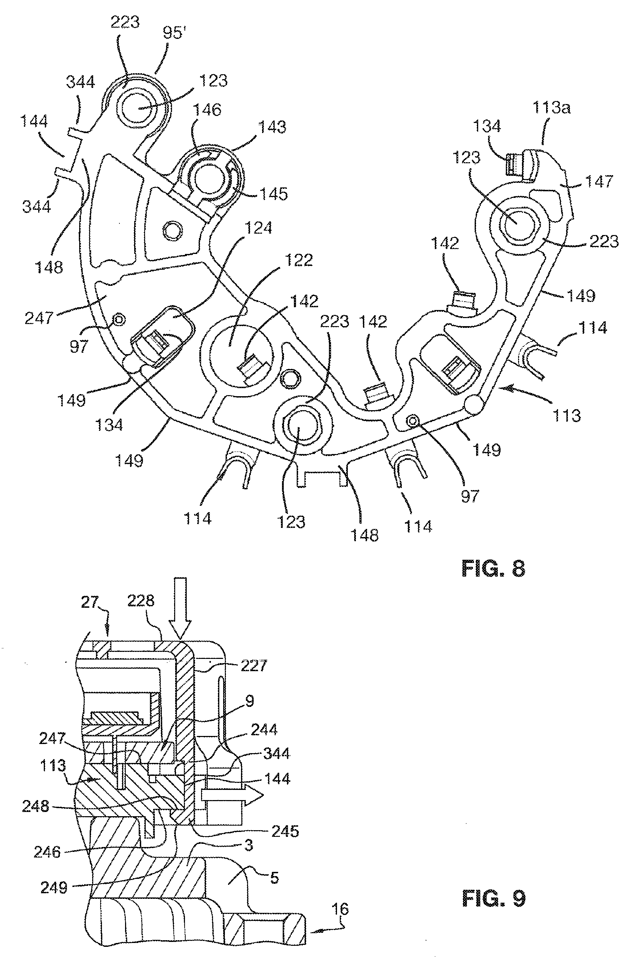

- la figure 8 est une vue de face du connecteur de l'agencement de redressement de courant des figures 2 à 6 ;
- la figure 9 est une vue partielle en coupe montrant une patte d'encliquetage du capot avec le connecteur des figures 2 à 6.

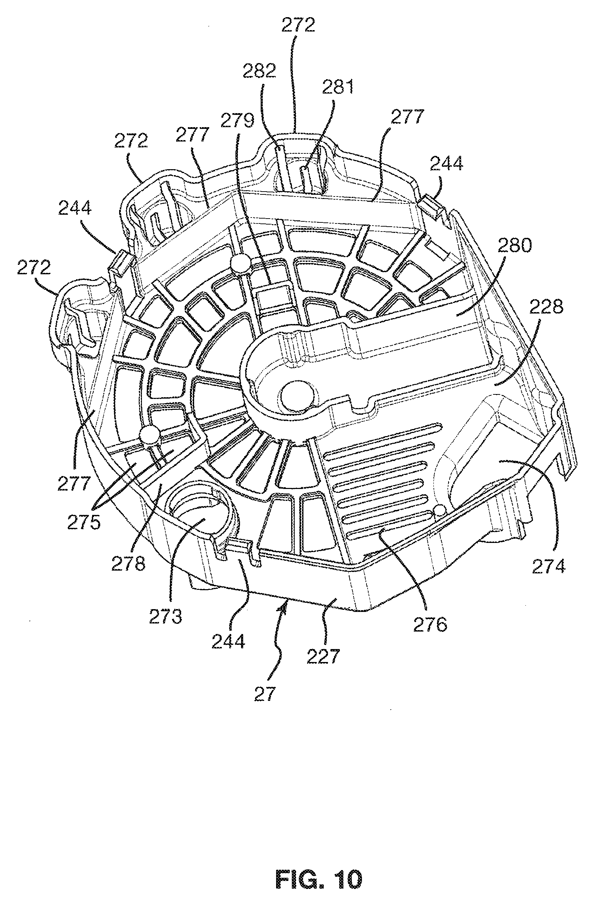

- la figure 10 est une vue en perspective de dessous du capot de protection pour montrer les pattes d'encliquetage ;

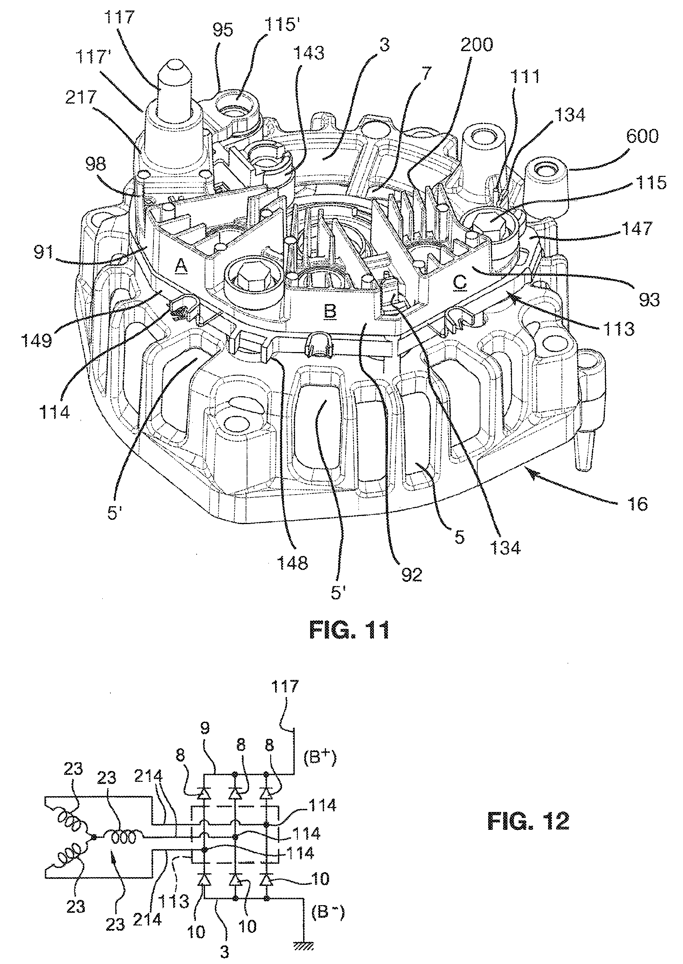

- la figure 11 est une vue en perspective analogue à la figure 2 pour un autre mode de réalisation
- la figure 12 est une vue schématique d'une partie des traces électrique du connecteur ;

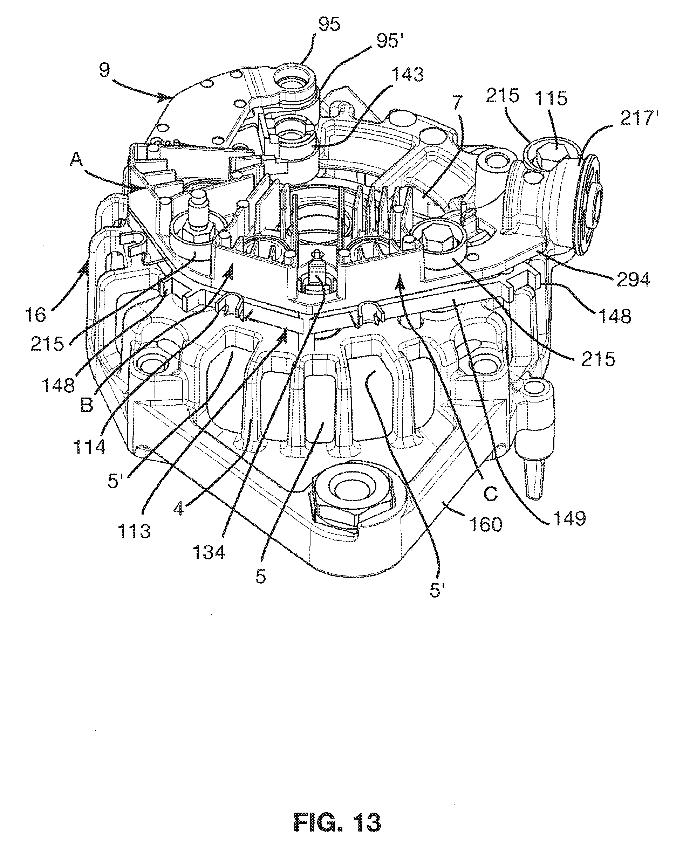

- la figure 13 est une vue en perspective analogue à la figure 11 pour encore un autre mode de réalisation.

### Description de modes préférentiels de réalisation de l'invention

Dans les figures 2 à 13 les éléments identiques ou similaires à ceux de la figure 1 seront affectés des mêmes signes de référence.

Dans les figures 2 à 11 on décrira ci-après les mesures constructives selon l'invention, pour rendre le connecteur et le dissipateur de chaleur positif 9 plus compact, pour refroidir encore plus les éléments positifs 8 de redressement de courant et diminuer la matière des corps du connecteur 113 et du dissipateur positif 9.Dans les figures 2 à 4 et 11 seul les éléments nécessaires à la compréhension de l'invention seront représentés. Ainsi on a représenté que deux organes de fixation 115 de l'agencement 1 et on n'a pas représenté l'ensemble porte balais-régulateur de tension, ni le capot, ni les sorties 214 des enroulements 23' des phases du bobinage 23 du stator (figure 12) pour mieux voir l'agencement de redressement de courant alternatif en courant continu 1 de l'invention.

Dans les figures 2 à 11 la machine électrique tournante polyphasée consiste, comme à la figure 1, en un alternateur de véhicule automobile du type triphasé, et la structure de l'alternateur polyphasé est globalement conservée, tandis que le connecteur 113 et le dissipateur de chaleur positif 9 électriquement conducteur, ici métallique et donc bon conducteur de chaleur, tous deux en forme de plaque, sont modifiés.

Le carter de l'alternateur abrite donc le bobinage du stator comprenant ici trois sorties de phase, chaque phase comportant ici un enroulement.
Par rapport à la figure 1 on conserve (figure 2 à 4 et 11) la structure du palier arrière 16 de forme creuse avec ses ouvertures d'entrée d'air 7, appartenant à son plateau 3 d'orientation transversale troué centralement pour passage de l'extrémité arrière de l'arbre 15 de la figure 1, et ses ouvertures latérales 5 de sortie d'air, appartenant à son rebord 4 périphérique globalement d'orientation axiale, pour circulation entre ces ouvertures 5, 7 de l'air de refroidissement engendrée par la rotation du ventilateur 104 de la figure 1. Il est prévu dans les figures 2 et 3 deux oreilles 160 de fixation du palier 16, ici en aluminium, sur une partie fixe du véhicule reliée à la masse. En variante, comme visible à la figure 11, le palier 16 est dépourvu d'oreilles 160, et il est prévu sur le plateau 3 une cheminée supplémentaire taraudée 600 pour la fixation d'une borne radiale. A la figure 13 on voit l'une des deux oreilles des figures 2 et 3 ainsi qu'une cheminée radiale 217' de montage d'une borne 117 décrite ci-après.

Les ouvertures 5 présentent une partie axiale affectant le rebord 4 prolongée par une partie radiale affectant la périphérie externe du plateau 3 pour obtenir par démoulage les ouvertures 5.

Le palier métallique 16 constitue par l'intermédiaire de son plateau 3 le support des éléments négatifs 10 de redressement de courant. Ce palier 16 constitue donc le dissipateur de chaleur négatif qui évacue la chaleur par conduction et convexion. Le plateau 3 est de plus grande taille que le dissipateur positif 9, qui évacue la chaleur principalement par convexion.

Dans ces figures les sorties 214 des enroulements 23' des phases sont destinées à traverser chacune la partie radiale d'une ouverture de sortie d'air et donc le plateau 3 pour pénétrer chacune dans un bossage 272 (figures 7 et 11) du couvercle 27 de protection coiffant l'agencement 1 et donc l'ensemble connecteur 113-dissipateur 9.

Dans l'exemple de réalisation représenté les sorties 214 des enroulements, comme à la figure 1, traversent une ouverture de sortie d'air dont la partie radiale 5' est plus profonde que celle des autres ouvertures 5 comme mieux visible dans les figures 3 et 11.

En variante l'un au moins des sorties de ces enroulements traverse une ouverture spécifique fermée réalisée à la périphérie externe du plateau 3.

Le dissipateur 9 et le connecteur 113 sont dotés d'un corps en forme de plaque et présentent, d'une part, une première extrémité globalement en forme d'oreille respectivement 95, 95', qui est globalement conservée et d'autre part une deuxième extrémité circonférentielle respectivement 94, 113a qui est modifiée de manière décrite ci-après.

Les premières extrémités 95, 95' du dissipateur 9 et du connecteur 113 sont superposées.

Le dissipateur 9 présente une surépaisseur 217 adjacente à l'oreille 95 et portant une cheminée 117' de montage d'une borne de connexion 117, dite borne B+, qui est destinée, via un câble, à être reliée à la borne positive de la batterie. Cette borne 117 est ici, comme décrit dans le document FR 2 807 583, une vis dont la tête est de forme polygonale, carrée, rectangulaire ou présente au moins un méplat. La base de la cheminée 117' et la surépaisseur 217 sont conformées en conséquence pour recevoir à coopération de formes la tête de la vis.

Le dissipateur 9 est, de manière décrite ci-après, modifié entre sa première extrémité circonférentielle 95 et sa deuxième extrémité circonférentielle.

Dans le mode de réalisation des figures 2 à 11 la deuxième extrémité circonférentielle 94 du dissipateur est en forme d'oreille plate et le dissipateur 9 est modifié entre sa borne 117 voisine des oreilles 95, 95' superposées et cette oreille 94. Cette borne 117 est ici d'orientation axiale c'est-à-dire perpendiculaire à la plaque du dissipateur 9.

Dans la figure 13 la borne 117 est d'orientation radiale et est voisine de la deuxième extrémité circonférentielle du dissipateur.

Ce dissipateur est alors modifié entre cette borne d'orientation radiale et la première extrémité circonférentielle 95 du dissipateur 9.

Le connecteur 113 comporte des conducteurs électriques, ici en forme de traces métalliques, et présente une oreille 143 adjacente à l'oreille 95' pour établir des liaisons électriques via des parties apparentes 145, 146 avec des traces du régulateur de tension comme décrit dans le document FR 2 754 654. Ce régulateur présente également une première et une deuxième oreille de fixation dotées de traces électrique pour contact électrique respectivement avec le dissipateur 9 et avec une cheminée taraudée (non référencée) proche de la deuxième extrémité circonférentielle 113a du connecteur 113.

La fixation du connecteur 113 et du dissipateur 9 sur le plateau 3 est réalisée en trois points à l'aide d'organe de fixation 115 traversant des trous alignés 115', 123 réalisés respectivement dans le dissipateur et dans le connecteur. Ces organes peuvent être des goujons comme à la figure 1, en variante des rivets ou des boulons. Ici les organes consistent en des vis 115. Pour ce faire le plateau 3 présente localement trois surépaisseurs en forme de cheminées taraudées pour le vissage des vis 115, ainsi que deux autres cheminées pour la fixation via des vis du régulateur de tension au niveau de sa deuxième oreille et de l'oreille 143.
Dans les figures on n'a pas référencé les cheminées visibles associées aux oreilles 143, 95, et la cheminée dédiée à la deuxième oreille du régulateur.
Les vis se vissent dans leur cheminée taraudée associée du plateau 3 et prennent appui par leur tête sur la pièce concernée la plus éloignée du plateau 3.
L'une de ces vis 115 prend appui via sa tête sur la première oreille du régulateur et traverse un trou de cette première oreille aligné avec les trous 115', 123. Le connecteur est doté de saillies axiales pour contact local avec le plateau 3 comme à la figure 1 du document WO 02/093717. Ici la face inférieure du connecteur 113, tournée vers le plateau 3, présente plusieurs saillies en forme de pions cylindriques pour contact local avec le plateau 3. Le connecteur 113 est donc surélevé par rapport au plateau 3 en étant parallèle et à distance axiale de celui-ci.

Dans un mode de réalisation on conserve le capot 27 de la figure 1 avec sa fixation par encliquetage sur les goujons de fixation 115 du dissipateur 9 et du connecteur 113 sur le plateau du palier arrière 16.

Dans un autre mode de réalisation le capot 27 présente, de manière conventionnelle, une collerette transversale pour sa fixation sur le palier 16 à l'aide par exemple des vis 29 de la figure 1.

Dans les figures 2 à 11 il est proposé une solution, décrite ci-après, dans laquelle le capot 27 est fixé par encliquetage sur le connecteur 113, tandis que les goujons 115 sont remplacés par des vis.

Ce capot 27 est électriquement isolant en étant ici en matière plastique ce qui permet d'obtenir par moulage les formes désirées

Dans ces figures 2 à 13 l'agencement 1 de l'invention se monte en lieu et place de celui de la figure 1. Cet agencement 1 comporte trois paires d'éléments de redressement de courant, à savoir trois premières diodes 8 et trois deuxièmes diodes 10. Ces diodes 8, 10 sont dotées chacune d'un corps cylindrique moleté constituant une borne de connexion électrique respectivement avec le dissipateur 9 et avec le plateau 3, et d'une queue constituant une autre borne de connexion électrique avec un réseau de conducteurs électriques appartenant au connecteur 113.

Les premières diodes 8 sont dites diodes positives car le dissipateur positif 9 est destiné à être relié à la borne positive de la batterie du véhicule automobile via sa borne 117, tandis que les deuxièmes diodes 10 sont dites diodes négatives car le plateau 3 et son palier 16, constituant le dissipateur de chaleur négatif, sont destinés à être reliés à la masse, dite B-, et donc à la borne négative de la batterie.

Le réseau de conducteurs électriques du connecteur 113 permet de relier entre elles les queues d'une paire de diodes 8, 10 avec une sortie 214 d'un enroulement 23' de phase du bobinage du stator, référencée en 23 à la figure 1, pour formation d'un pont entre le dissipateur 9 et le plateau 3 et création de l'agencement 1 de redressement de courant alternatif en courant continu comme visible schématiquement à la figure 12.

Le palier arrière métallique 16 constitue le support des diodes négatives 10 emmanchées à force chacune par leur corps moleté dans un trou chanfreiné associé du plateau 3, tandis que les corps moletés des diodes positives 8 sont emmanchés à force chacun dans un trou 8' chanfreiné du dissipateur de chaleur 9.
Les diodes 10 sont refroidies par conduction par le palier 16, ici en aluminium en variante en magnésium, et par convexion. Le dissipateur 9, ici métallique, et les diodes 8 sont refroidis principalement par convexion.

Les diodes 8, 10 sont montées tête bêche pour réduction de l'encombrement axial. Les queues 111 des diodes positives 8, pour un meilleur refroidissement, pénètrent avantageusement dans les ouvertures 7 d'entrée d'air du plateau 3 globalement en forme de plaque de taille supérieure au dissipateur 9. Les queues 111 des diodes 10 sont dirigées axialement en sens inverse vers le dissipateur 9.

En variante les queues 111 sont plus courtes et ne pénètrent pas dans les ouvertures 7. Elles sont dans tous les cas en regard de ces ouvertures 7 et donc bien nettoyées par la circulation de l'air engendrée par la rotation du ventilateur 104 de la figure 1.
Ce dissipateur 9 est ici en matière moulable pour obtenir aisément les formes désirées. Il est ici en aluminium, en variante à base de magnésium. On peut également usiner dans la masse le dissipateur 9 en sorte qu'en variante le dissipateur 9 est en cuivre.
Ce dissipateur 9 comporte un corps en forme de plaque, qui est parallèle au corps en forme de plaque du connecteur 113.

Dans ces figures 2 à 4 on voit en 6 l'âme cylindrique de montage du roulement 106 de la figure 1 et en 60 la capsule trouée associée à ce roulement. Les ouvertures 7 de forme oblongue, ici globalement de forme trapézoïdale, sont délimitées intérieurement par l'âme 6, latéralement par deux bras non référencées, et extérieurement par la matière périphérique du plateau 3, dans laquelle sont montés les corps des diodes 10. Les ouvertures 7 sont ici circonférentiellement et radialement de taille différente et il est prévu une seule queue de diode 8 par ouverture 7. Cela dépend de la configuration des ouvertures 7 du palier 16. Ainsi en variante deux queues de diode 8 peuvent pénétrer dans une même ouverture 7 configurée en conséquence.

Le connecteur 113 (figure 8) est modifié du fait de la configuration du dissipateur 9 impliquant une modification de l'implantation des diodes positives 8 par rapport aux trous d'accès 111' aux queues des diodes négatives 10 de manière décrite ci-après.

Dans un mode de réalisation on conserve, pour accès aux ouvertures d'entrée d'air 7, la partie annulaire interne du connecteur à larges ouvertures du type de la figure 7 du document WO 02/093717

Dans un autre mode de réalisation on supprime cette partie annulaire interne à larges ouvertures, pour un meilleur refroidissement des premières diodes 8, réduction de la consommation de matière et un meilleur accès aux ouvertures 7. Ce connecteur 113 est plus économique, simplifié, de taille réduite et plus compact, léger et aéré. La périphérie interne du dissipateur 9 est donc, selon une caractéristique, en plus grande partie en regard des entrées d'air 7.

Le corps du connecteur 113 (figure 8) est en matière électriquement isolante, ici en matière plastique, dans laquelle est noyé par surmoulage, un réseau de conducteurs électriques, ici plats en aluminium, en variante en cuivre. Ces conducteurs sont localement apparents, c'est-à-dire dénudés, en 114, 134, 142, 145, 146 pour formation de connexions électriques respectivement avec les sorties des enroulements des phases du stator, avec les queues 111 des diodes 10, avec les queues des diodes 8 et avec, de manière précitée, des traces du régulateur de tension.

Les parties dénudées 114, 134 et 142 sont globalement en forme d'équerre et comportent chacune une portion d'enracinement transversale dans le plan du corps du connecteur 113. Cette portion pénètre à l'une de ses extrémités dans le corps du connecteur 113 et est prolongée à son autre extrémité par une portion terminale saillante de fixation, qui est globalement perpendiculaire au corps du connecteur 113.

Ce corps comporte un seul trou de passage 122, ici cylindrique, d'une queue d'une diode positive 8, trois trous de passage 123, ici cylindriques, d'organes de fixation 115 du dissipateur 9 au plateau 3, deux trous d'accès 124, ici radialement de forme oblongue, à deux queues 111 de diodes négatives 10. Le nombre de trous 122, 124, ici fermés, est donc réduit.

Chaque trou 123 appartient à un bossage 223 que présente localement en saillie le corps du connecteur 113, qui présente également des surépaisseurs moins hautes que les bossages 223 comme visible à la figure 8.

L'un des bossages 223 appartient à l'oreille 95'.

Le trou 122 est dédié à une équerre 142, tandis que les deux trous 124 sont dédiés chacun à une équerre 134.

La portion d'enracinement d'une seule équerre 142 pénètre donc dans le trou 122, tandis que les portions d'enracinement de deux équerres 134 pénètrent chacune dans l'un des deux trous 124.

Deux équerres 142 et une équerre 134 sont implantées à la périphérie interne du connecteur 113.

Dans les figures 2 et 4 on voit seulement deux vis de fixation 115, car le troisième vis 115, de manière précitée, est destinée à fixer localement l'ensemble régulateur de tension-porte balais (non visible), le dissipateur 9 et le connecteur 113 sur le plateau 3 au niveau des oreilles 95, 95'.

Pour ce faire l'oreille 95' du connecteur est trouée en 123, et présente un bossage 223. Cette oreille 95' a une forme correspondante à celle de l'oreille 95 du dissipateur 9 trouée en 115' pour passage de la vis 115, qui traverse également la première oreille trouée du régulateur. Les trous 123, 115' et de la première oreille du régulateur sont axialement alignés.

La fixation des oreilles 95, 95' et du régulateur est réalisée à isolation électrique via le connecteur 113. L'oreille 95 du dissipateur 9 est intercalée entre l'oreille 95' du connecteur 113 et la première oreille du régulateur. L'oreille 95 prend appui sur le bossage 223 de l'oreille 95'.

Comme visible dans les figures 2 à 4 et 11 le connecteur 113 et le dissipateur 9 sont juxtaposés, c'est-à-dire empilés axialement. Le connecteur 113 est intercalé axialement entre le plateau 3 et le dissipateur 9 pour réaliser via son corps une isolation électrique entre le dissipateur 9 et le plateau 3, qui sont à des potentiels différents. Le connecteur 113 et le dissipateur 9 sont localement en contact en trois points sur le plateau 3 présentant des cheminées taraudées à cet effet de manière précitée. Les corps du connecteur 113 et du dissipateur 9 sont parallèles

Ainsi la face supérieure 247 (figure 8 et 9) du corps du connecteur 113, la plus éloignée du plateau 3, est en contact local avec la face inférieure du corps du dissipateur 9 tournée vers le plateau 3, en trois points constitués par trois bossage 223 dotés chacun d'un trou 123 de passage d'une vis 115.

L'un de ces bossages 223 appartient à l'oreille 95' du connecteur 113. Un autre de ces bossages 223, est adjacent à la seconde extrémité circonférentielle 113a. L'autre bossage 223 occupe circonférentiellement une position intermédiaire. La face interne du dissipateur 9 est globalement lisse selon une caractéristique.

Un jeu, mieux visible à la figure 11, existe donc, selon une caractéristique, entre la face inférieure du dissipateur 9 et la face supérieure 247 du connecteur 113. L'importance de ce jeu est fonction de la hauteur des bossages 223. Ce jeu permet un passage de l'air et suivant une caractéristique on crée au moins un trou externe 300 à la périphérie externe du dissipateur pour permettre, à la faveur de ce jeu, un passage de l'air entre les corps en forme de plaque du connecteur 113 et du dissipateur 9 et améliorer ainsi le refroidissement des diodes 8.

Il est prévu plusieurs trous externes 300. Chaque trou 300 est délimité par la périphérie interne d'une paroi 91 à 93 périphérique du dissipateur 9 saillante vers l'extérieur. Ces parois 91-93 sont implantées à la périphérie externe du dissipateur 9. Elles s'étendent en vis-à-vis et à l'extérieur des diodes 8. Elles sont circonférentiellement plus large que le diamètre d'un trou 8' de montage d'un corps d'une diode 8 (figures 5 et 6). Les parois 91-93 sont saillantes par rapport au corps en forme de plaque du dissipateur positif 9. Chaque trou 300 est moins large circonférentiellement que la paroi périphérique à laquelle il se raccorde. Ce trou s'étend à l'extérieur d'une zone de montage d'une diode positive 8.
Au moins une bande de matière existe donc entre la entre la zone de montage d'une diode 8 et la paroi périphérique concernée 91 à 93 pour évacuer par conduction la chaleur. Ainsi selon une caractéristique il existe une continuité de matière entre le premier élément de redressement de courant et sa paroi périphérique concernée en vis-à-vis.
Les parois 91 à 93 appartiennent chacune selon une caractéristique à une cellule de refroidissement A, B, C (figure 2, 5 et 11) comprenant chacune un premier élément de redressement de courant 8 et le trou associé 300 à cette paroi. Chaque cellule est délimitée latéralement par une paire de parois transversales saillantes vers l'extérieur, respectivement 191-191', 192-192', 193-193' qui s'étendent de la périphérie externe à la périphérie interne du dissipateur 9.
Les parois transversales 191-191', 192-192', 193-193' sont saillantes par rapport au corps en forme de plaque du dissipateur positif 9. Le corps en forme de plaque du dissipateur 9 constitue le fond des cellules A, B, C, qui, selon une caractéristique, sont borgnes en étant ouvertes au niveau de la périphérie interne du dissipateur 9.
Selon une autre caractéristique, un espace libre existe entre deux cellules consécutives ici respectivement A, B et B, C. Ainsi un couloir de passage d'air, ici transversal, existe entre deux parois transversales en vis-à-vis de deux cellules consécutives de manière décrite ci-après et comme visible dans les figures 2 à 6, 11 et 12.
Plus précisément chaque paroi transversale d'une cellule se raccorde à sa périphérie externe à l'une des extrémités circonférentielle de la paroi périphérique concernée. Chaque cellule est ainsi délimitée par la matière d'une zone de montage de la diode positive 8 concernée appartenant au corps en forme de plaque du dissipateur 9, et par un motif saillant constitué par une paroi périphérique et latéralement par deux parois transversale. Chaque motif, et donc chaque cellule, est borgne en étant ouvert au niveau de la périphérie interne du dissipateur 9, qui est de forme tortueuse adaptée à la présence des ouvertures 7 d'entrée d'air. La distance entre les parois transversales d'une même cellule est fonction du diamètre du trou 8' de montage d'une diode pour autoriser l'implantation d'une telle diode à la périphérie interne du dissipateur 9 comme visible dans les figures 2 à 6 et 11.

Dans une configuration à un seul trou externe 300 par cellule il existe au moins une bande de matière entre l'une des paroi transversale et le trou 300.

Pour améliorer encore les échanges thermiques, l'une au moins des cellules A, B, C est dotée d'au moins une ailette interne de refroidissement à sa périphérie interne. Cette ailette interne est saillante vers l'intérieur par rapport à la périphérie interne du dissipateur 9.
Dans un mode de réalisation l'ailette interne de refroidissement de la cellule concernée est distincte des parois transversales de cette cellule.

Ainsi l'une au moins des cellules comporte au moins une ailette interne supplémentaire de refroidissement 200 saillante radialement vers l'intérieur par rapport à la périphérie interne du dissipateur 9, le premier élément de redressement de courant 8 de cette cellule est implanté entre le ou les trous externe 300 et l'ailette interne 200.
Dans un mode de réalisation, l'une au moins des parois l'une au moins des parois transverales d'au moins une cellule est prolongée radialement vers l'intérieur pour former une ailette interne de refroidissement en vis-à-vis d'une ouverture 7 et favoriser l'évacuation de la chaleur par convection.
Avantageusement, pour encore un meilleur refroidissement, chaque paroi transversale d'au moins une cellule est prolongée vers l'intérieur en direction d'une ouverture 7 pour former une ailette interne pour encore un meilleur refroidissement.
Dans le mode de réalisation représenté toutes les cellules présente des parois transversales prolongées vers l'intérieur.
D'une manière générale les ailettes internes s'étendent en saillie vers l'intérieur par rapport à la périphérie interne du dissipateur positif 9.

La première cellule A est la plus proche de la première extrémité circonférentielle 95 du dissipateur, tandis que la troisième cellule C est la plus proche de la deuxième extrémité circonférentielle du dissipateur.

Ces deux extrémités sont trouées chacune pour le passage ici d'une vis de fixation 115. La deuxième cellule B est implantée circonférentiellement entre les deux cellules A, C.

Dans les figures 2 à 11 la première cellule A est la plus proche de la borne 117 voisine de la première extrémité circonférentielle 95 du dissipateur, tandis que la troisième cellule C, constituant la cellule d'extrémité, est adjacente à la deuxième extrémité circonférentielle 94 du dissipateur 9 en forme d'oreille plate trouée en 115'pour le passage ici d'une vis de fixation 115.
Les cellules ont une forme différente, qui est fonction de leur position sur le dissipateur comme visible dans les figures 5 et 6.Ici les cellules A et B sont plus étroites à leur périphérie interne que la cellule C.
On notera que cette troisième cellule C comporte une paroi transversale 193' de forme tortueuse pour créer un dégagement pour la tête de la vis associé à l'oreille 94. Cela permet de réduire l'encombrement circonférentiel du dissipateur.

Les trous 300 s'étendent à l'extérieur des premières diodes 8, qui sont implantés au voisinage de la périphérie interne du dissipateur 9 pour avoir la plus grande quantité de matière dans une cellule compte tenu de la présence des trous 300 (figures 5 et 6).
Par rapport à la réalisation des figures 4 à 6 du document WO 02/09317 toutes les diodes 8 sont implantées à la périphérie interne du dissipateur et tous les trous 300 à la périphérie externe du dissipateur 9. Le connecteur 113 est configuré en conséquence de manière décrite ci-après.
Ainsi de la matière est présente entre la périphérie interne de ces trous 300 et les corps des diodes 8.
A au moins une cellule il est associé avantageusement ici au moins deux trous externes 300 de passage d'air, qui sont de faible taille et en forme de quadrilatère. La présence d'au moins deux trous externe 300 de faible taille, moins larges circonférentiellement que leur paroi périphérique associée, permet d'obtenir une meilleur résistance mécanique du dissipateur 9 tout en ayant un bon passage d'air.

Dans l'exemple de réalisation représenté il est associé à chaque cellule au moins deux trous 300.

Ainsi deux trous externes 300 au moins sont associés à chaque paroi périphérique 91 à 93. Ces trous sont séparés par une bande de matière, qui s'étend de la paroi périphérique concernée 91-93 à la matière de la zone de montage d'un corps d'une diode 8 comprenant le trou 8'.
La bande de matière et la matière de la zone de montage d'un corps d'une diode permettent d'évacuer la chaleur par conduction à travers le dissipateur 9 relié via sa borne 117 au câble de la batterie constituant une source froide.
Ces au moins deux trous permettent également un bon nettoyage du dissipateur en empêchant l'accumulation d'eau, notamment salée, ou de toute autre souillures notamment au niveau des parois 91-93.
Les deux trous d'une cellule sont dans un mode de réalisation à distance des parois transversales de cette cellule.
Ici les deux trous sont avantageusement délimités également chacun par une paroi transversale de la cellule concernée pour un meilleur nettoyage et une meilleure évacuation de la chaleur. Ces parois transversales constituent des ailettes externes de refroidissement dirigées vers l'intérieur.
Pour améliorer encore plus le refroidissement des diodes 8 il est prévu de doter au moins l'une des cellules d'au moins une ailette externe 400 supplémentaire à la périphérie externe du dissipateur 9. Cette ailette 400 délimite latéralement un trou 300 et est distincte des parois transversales concernées.
Dans les figures 4 et 5, il est prévu plusieurs ailettes externes 400 par cellules. Ces ailettes 400 délimitent en partie latéralement les trous 300. Ces ailettes permettent d'augmenter les échanges de chaleur par convexion et, dans le mode de réalisation représenté, sont prolongées dans la zone de montage d'un corps d'une diode 8 pour encore mieux évacuer la chaleur. Les ailettes 400 appartiennent à la bande de matière séparant deux trous 300 consécutifs.
Pour améliorer encore les échanges de chaleur on prévoit plus de deux trous 300 par paroi 91-93 et plus de deux ailettes supplémentaires 400.
Dans les figures 5 et 6 il est prévu trois ailettes externes 400 et quatre trous 300 par paroi 91-93 par cellule. Deux de ces trous sont délimités également par les parois transversales d'une cellule.
Suivant une caractéristique, on implante à la périphérie interne d'au moins une cellule du dissipateur 9 au moins une d'ailette interne 200 supplémentaire de refroidissement saillantes radialement vers l'intérieur par rapport à la périphérie interne du dissipateur positif 9.
L'ailette interne 200 est distincte des parois transversales de la cellule concernée. Suivant une caractéristique le premier élément de redressement de courant 8 de la cellule concernée est implanté entre le ou les trous externes 300 et cette ailette interne.
En variante les parois transversales de cette cellule sont dépourvues d'ailette interne en sorte que la cellule concernée présente au moins une ailette interne supplémentaire 200.
Ici il est prévu plusieurs ailettes internes 200 par cellule.
Ces ailettes 200, distinctes des parois transversales et saillantes vers l'intérieur par rapport à la périphérie interne du dissipateur 9, sont implantées par série chacune en dessous d'un trou 8' et d'une première diode 8 pour mieux refroidir encore celles-ci.
On notera que les ailettes internes 200 et externes 400, ainsi que les parois transversales et périphériques ont une forme qui dépend de la position de la cellule sur le dissipateur comme visible dans les figures 5 et 6.
Dans ces figures le nombre d'ailettes externes 400 et de trous 300 (respectivement trois ailettes externes 400 et quatre trous 300) est supérieur au nombre d'ailettes internes 200 (deux) pour la première cellule A et pour la deuxième cellule B intermédiaire.
Dans un mode de réalisation la troisième cellule C comporte le même nombre de trous 300 et d'ailettes 400, 200 que les cellules A et B.
Dans le mode de réalisation représenté dans les figures on augmente le nombre d'ailettes internes de la troisième cellule extrême C, ici au nombre de quatre, pour mieux refroidir la dernière diode 8 adjacente à la patte 94 ; le nombre d'ailettes externes 400 et de trous 300 étant identique à ceux des autres cellules.
Ainsi qu'on l'aura compris chaque cellule est configurée selon les applications, sachant que la première cellule A est la plus froide Cette cellule A, dans un mode de réalisation, comporte un nombre d'ailettes externes et/ou d'ailettes internes moindre que les autres cellules B ,C. Elle peut ne pas comporter d'ailettes internes et /ou externe.
Le nombre d'ailettes 200, 400 et de trous 300 est fonction de la température atteinte par la diode 8 concernée. En jouant sur ces paramètres et la longueur des ailettes on peut mieux contrôler la température des diodes 8 et rendre la température plus uniforme d'une diode 8 à l'autre. L'élément de redressement de courant 8 d'au moins une cellule est donc implanté entre la ou les ailettes externes 400 et la ou les ailettes internes 200.

En ce qui concerne le connecteur 113, les équerres apparentes 114, appelées crochets, sont implantées en saillie à la périphérie externe du connecteur 113 et sont destinées par l'intermédiaire de leur portion terminale de fixation à la fixation des sorties 214 des enroulements 23' des phases du bobinage 23, par exemple branchées en étoile (figure 12). Chaque portion terminale de fixation est surélevée et est globalement en forme de U à branches divergentes rabattables pour former une pince de fixation par sertissage d'une sortie 214 d'un enroulement 23' dénudée au niveau des branches divergentes pour contact électrique avec celles-ci. Trois crochets 114 de sertissage sont donc prévus. En variante on fixe les sorties 214 des enroulements 23' par soudage sur les portions de fixation des crochets 114.

Les équerres apparentes 134 et 142 comportent des portions de fixation montées tête bêche et dotée chacune d'un pli pour contact local avec la queue respectivement d'une diode négative 10 et d'une diode positive 8. La fixation des queues des diodes sur les plis des extrémités des équerres est réalisée ici par soudage, en variante par sertissage comme pour les crochets 114. Deux portions terminales de fixation de deux équerres 134 pénètrent axialement dans un trou d'accès fermé associé 111' du dissipateur 9, qui sont en correspondance chacun avec un trou 124 du connecteur 113 pour accès à au moins l'une des bornes des secondes diodes 10, ici aux queues 111 concernées. Les équerres 134 traversent les trous 111'.Les trous 111' et 124 ont ici radialement une forme oblongue avec deux bords latéraux parallèles (figures 5, 6 et 8). Le dissipateur 9 présente donc suivant une caractéristique un nombre de trous 111' inférieur au nombre de diodes négatives 10 et deux des diodes 10 sont accessibles à travers les trous d'accès 111', 124 groupés par paire.

Les trous d'accès 111', 124 aux équerres 134 et aux diodes 10 s'étendent à la périphérie externe du dissipateur 9 et du connecteur 113. Ils sont décalés vers l'extérieur et circonférentiellement par rapport aux trous 8' et aux équerres 142 du fait que les diodes 8 sont toutes implantées à la périphérie interne du dissipateur 9.

Suivant une caractéristique la troisième équerre 134 de fixation de la queue 111 de la diode 10 extrême, dite équerre d'extrémité, est portée par la seconde extrémité circonférentielle 113a du connecteur 113 car sa portion d'enracinement pénètre dans la seconde extrémité 113a. Cette équerre d'extrémité 134, selon une caractéristique, ne pénètre pas dans un trou du dissipateur positif 9. Elle est décalée circonférentiellement par rapport à la deuxième extrémité circonférentielle 94 du dissipateur 9 en forme d'oreille plane trouée en 115'.
Les diodes positives 8 sont selon une caractéristique intercalées circonférentiellement entre les oreille 94, 95, plus précisément entre la borne 117 et l'oreille 94 comme visible à la figure 6.
Les diodes 8, portées par le corps du dissipateur 9, sont implantés circonférentiellement entre les deuxièmes extrémités 113a, 94 du connecteur 113 et du dissipateur 9 et l'oreille 143 du connecteur.

Selon une caractéristique le dissipateur 9 présente une longueur circonférentielle inférieure à celle du connecteur 113. La seconde extrémité circonférentielle 113a du connecteur 113 s'étend circonférentiellement en saillie par rapport à l'oreille 94 du dissipateur 9.

L'une des diodes 8 est adjacente à l'oreille de fixation 94.

Le dissipateur 9 est plus compact circonférentiellement que celui de la figure 5 du document WO 02/093717. Il est donc plus léger.
L'équerre d'extrémité 134 est donc dégagée par rapport au dissipateur 9 et également par rapport au corps du connecteur 113 car elle présente une portion d'enracinement saillante vers l'intérieur par rapport à la périphérie interne du corps du connecteur 113 et une portion de fixation saillante axialement en direction opposée au plateau 3. L'extrémité 113a est de largeur réduite au niveau de cette équerre 134.

Les portions de fixation des équerres 142 sont dirigées en direction d'une ouverture d'entrée d'air 7. Selon leur longueur, ces portions peuvent ou non pénétrer dans une ouverture 7.

Suivant une caractéristique les deux autres équerres 142 présentent des portions d'enracinement saillantes vers l'intérieur par rapport à la périphérie interne du corps du connecteur 113. Ces équerres 142 sont donc dégagées et s'étendent de part et d'autre de l'équerre intermédiaire 134, montée dans le trou 124. La périphérie interne évidée du connecteur présente donc une forme tortueuse avec apport de matière de respectivement au niveau du trou 123 adjacent à la deuxième extrémité 113a et au niveau du second trou extrême 124 implanté entre les deux équerres dégagées 142. Il en résulte que la périphérie interne du connecteur 113 a une forme sinusoïdale entre son extrémité 113a et l'équerre dégagée, dite première équerre dégagée, la plus éloignée de l'extrémité 113a comme visible à la figure 8.

La périphérie interne du corps du connecteur 113 présente également une portion globalement rectiligne entre l'oreille 143 et la première équerre 142 dégagée en vis-à-vis d'un crochet 114. Le corps du connecteur 113 est d'épaisseur réduite à cet endroit (figure 8).

Il présente un creux globalement semi circulaire au niveau de cette première équerre 142 et un autre creux globalement semi circulaire entre le second trou extrême 124 et le trou 123 adjacent à l'extrémité 113a, les dits creux appartenant à la forme sinusoïdale.

Cela permet de donner au connecteur 113 la rigidité voulue et de laisser de la place au niveau des deux creux, globalement de forme semi-circulaire, pour dégager au maximum les trous 8' et les corps des deux diodes 8 les plus proches de la deuxième extrémité 113a du connecteur 113.

La périphérie interne du connecteur présente donc deux dégagements pour accès au moins en majeure partie aux corps de ces deux premières diodes 8.
Le trou 124 adjacent au trou 122 est décalé circonférentiellement par rapport à ce trou 122 en étant intercalé circonférentiellement entre ce trou 122 et l'oreille 95'.

La périphérie interne tortueuse du connecteur 113 est dégagée au maximum au niveau des ouvertures 7 du plateau 3. Cela permet de mieux refroidir la diode positive 8 la plus éloignée de la borne 117 sachant que la région du dissipateur 9 voisine de la borne 117 est la plus froide car cette borne 117, dite borne B+, est destinée à être reliée à la borne positive de la batterie du véhicule automobile via un câble qui permet également d'évacuer les calories par conduction.

La diode 8 la plus proche de la borne 117 est donc la plus froide, sachant que les diodes 10 sont plus froides car elles sont refroidies par le palier 16 présentant plus de matière que le dissipateur 9.

Le connecteur 113 est donc adapté à la forme du dissipateur 9. Il est plus aéré que celui de l'art antérieur tout en conservant ses fonctions au niveau des oreilles 143, 95'. Le corps de ce connecteur 113 est rogné dans ce mode de réalisation à sa périphérie interne entre le trou 122 et sa seconde extrémité circonférentielle 113a. Ce corps laisse donc plus de passage d'air pour mieux refroidir le dissipateur 9. Il est plus léger et plus économique.
Par rapport à l'art antérieur on ne modifie pas le dissipateur 9 et le connecteur 113 au niveau de leur extrémité circonférentielle comportant les oreilles 95, 95' et 143. On diminue la matière du corps du connecteur 113 et le nombre de trous 122, 124.

On notera que l'un des trous 124 est plus proche des oreilles 95, 143 que le trou 122 et que dans le document WO 02/093717 (figure 7) c'est l'inverse.

Ainsi dans le mode de réalisation de la figure 8, les équerres 134 de fixation des queues 111 des diodes négatives 10 sont décalées circonférentiellement en direction de la deuxième extrémité circonférentielle 113a et de la première extrémité circonférentielle 95' du connecteur 113 par rapport aux équerres 142 de fixation des queues des diodes positives 8. L'une des équerres 134 est plus proche des oreilles 95', 143 que les équerres 142, tandis que la dernière équerre 134 est plus proche de la deuxième extrémité 113a que les équerres 142.

Deux équerres 142 sont implantées entre les deux trous 124.

Il en résulte de ce qui précède que le dissipateur 9 comprend deux trous 111' réalisés dans son corps et associés chacun à un trou 124. Le premier de ces trous 111', d'accès à la borne 111 de la deuxième diode 10 concernée, est plus proche circonférentiellement de la cheminée 117' et de la borne 117 (et donc de l'oreille 95) que les trous 8' et les premières diodes 8. Ce premier trou 11' est implanté circonférentiellement entre la borne 117 et la première cellule A. Le deuxième de ces trous 111' d'accès à une borne d'une autre seconde diode 10 est donc implanté circonférentiellement entre les deux trous 8' et les deux premières diodes 8 les plus éloignées de la borne 117 et donc entre les deux cellules B, C. Ce deuxième trou 111' appartient donc au fond du couloir de passage d'air existant entre les deux parois transversales en vis-à-vis des cellules consécutives C, B comme visible par exemple dans les figures 5 et 6.

On notera que le trou 115' médian de passage d'un organe de fixation 115 est réalisé dans le corps du dissipateur 9 et est implanté circonférentiellement entre le trou 8' de la diode médiane 8 et le trou 8' de la diode 8 la plus porche circonférentiellement de la borne 117. Ce trou est implanté circonférentiellement entre les parois transversales en vis-à-vis 191', 192 des cellules A et B et est donc aisément accessible. Ce trou 115' appartient au fond du couloir des passage d'air existant entre les deux parois transversales 192, 191' en vis-à-vis des cellules consécutives B, A comme visible par exemple dans les figures 5 et 6.

Les deux autres trous 115' appartiennent respectivement à l'oreille 94 et à l'oreille 95.

Cette disposition permet une fixation simple et rapide des vis à l'aide d'une visseuse du fait que les têtes des vis sont accessibles, notamment au niveau du trou médian 115' grâce au couloir de passage d'air entre les cellules B et A. Il existe suffisamment de place pour passer la visseuse.

Tous les trous 115', 111' et 8' sont, selon une caractéristique, décalés circonférentiellement les uns par rapport aux autres.

Toutes ces dispositions permettent de réduire la longueur circonférentielle du connecteur 113 et du dissipateur 9, qui selon une caractéristique sont plus compacts circonférentiellement.

Le connecteur 113 de la figure 8 présente deux pions saillants 97 de positionnement engagés chacune dans un trou cylindrique 97' ménagé à la périphérie externe du dissipateur métallique 9 (figures 4 et 5).

Ainsi le connecteur 113, suivant une caractéristique, est positionné angulairement par rapport au dissipateur 9 en sorte que les trous 115', 123 sont alignés et que les queues 111 pénètrent dans les trous 111'.

On notera que l'un des trous 97' est délimité par la paroi intermédiaire 92 et par deux ailettes externes 400 de la deuxième cellule B. Ce trou se substitue à l'un des trous externes 300. L'autre trou 97' est adjacent à la borne 117.
Les organes de fixation 115, ici des vis, traversent les ouvertures alignés 115', 123 et c'est pour cette raison que des manchons 215, électriquement isolants sont enfilés dans les ouvertures 115' pour isoler les organes de fixation 115, vissés dans le plateau 3, par rapport au dissipateur 9. Ici les manchons 215 présentent un changement de diamètre pour appui ici de la tête de la vis 115 sur ce changement de diamètre.

Bien entendu on peut conserver les manchons 215 et utiliser des goujons de fixation comme à la figure 1.

Dans tous les cas il y a suffisamment de place pour implanter les manchons 215, notamment entre les cellules A et B comme visible dans les figures.

On notera que le plus grand diamètre d'un manchon est dimensionné pour le passage de la visseuse.

On notera que les bossages 223 présentent également une collerette non référencée pénétrant chacune dans un trou 115' pour compléter l'isolation électrique en association avec les manchons 215.

Comme à la figure 1 la face inférieure 246 du connecteur 113, la plus proche du plateau 3, présente localement des changements de diamètre pour entourer en partie la cheminée associée du plateau 3.

Dans les figures on remplace les goujons par des vis 115 et on fixe de manière économique le capot 27 par encliquetage sur le connecteur 113.

Pour ce faire le corps du connecteur 113 (figure 8) présente à sa périphérie externe deux saillies 148, dotées chacune d'un évidement 144 en forme de U, et une saillie 147 en forme de méplat. Les saillies 148, 147, obtenues par moulage, sont dirigées vers l'extérieur. Une saillie 148 est implantée au niveau de la première extrémité circonférentielle 95' du connecteur 113, tandis que la saillie 147 est implantée au niveau de la deuxième extrémité circonférentielle 113a du connecteur 113 et ce au voisinage d'un bossage 223 et de l'équerre d'extrémité 134.

L'autre saillie 148 est implantée entre deux crochets 114 au voisinage du bossage 223 médian et du trou médian 115', c'est-à-dire circonférentiellement entre les cellules A et B.

Les saillies 147, 148 sont donc implantées chacune au voisinage d'un trou 123 de fixation, traversé par une vis 115 et donc au voisinage d'un bossage 223 et d'un point de fixation du dissipateur 9 et du connecteur 113 sur le plateau 3.

Le capot 27 (figures 7, 9 et 10) est de forme creuse. Il est ici en matière plastique et est donc électriquement isolant. Il présente un fond 228, globalement d'orientation transversale par rapport à l'axe X-X de la figure 1. Ce fond 228 est prolongé à sa périphérie externe par une jupe 227 globalement d'orientation axiale par rapport à l'axe X-X de la figure 1. Cette jupe 227 est donc globalement perpendiculaire au fond 228.

Ce fond 228 est ajouré, ici grillagé, pour passage du flux d'air traversant le dissipateur 9, le connecteur 113 et les ouvertures 7 de manière décrite ci-après.

Ce capot 27 permet d'obtenir par moulage de sa matière plastique aisément les formes souhaitées.

Ainsi à la figure 7 on voit en 275 une pluralité d'ouvertures de passage du flux d'air formant un grillage et en 276 d'autres ouvertures pour le refroidissement du régulateur de tension. La référence 271 désigne un logement pour le porte-balais, tandis que les références 274 et 273 sont des trous respectivement pour le passage du connecteur du régulateur de tension et pour la borne 117 portée par le dissipateur 9.

Le capot 27 présente à sa périphérie externe des bossages 272, ici trois bossages, pour passage et logement des sorties 214 des enroulements 23' des phases, qui traversent axialement le plateau 3 à la faveur de la partie radiale d'une ouverture 5 affectant la périphérie externe du plateau 3 comme à la figure 1.

Cette partie radiale est de manière précitée agrandie comme visible en 5' dans les figures 3 et 11.

En variante les sorties 214 traversent un trou spécifique du plateau 3.
Ce capot 27 est configuré afin qu'il coopère avec les saillie 147, 148 pour sa fixation par encliquetage sur la face inférieure 246 en matière plastique du corps du connecteur 113 tournée vers le plateau 3.

Les saillies 147, 148 sont destinées à coopérer chacune (figure 9) avec une patte d'encliquetage 224 à crochet 245 issue par moulage de la jupe 227 du capot 27 qui présente trois pattes 244 circonférentiellement espacées (figure 10). Chaque patte 244 est d'orientation axiale et l'une au moins de ces pattes est dans le mode de réalisation des figures 9 et 10 d'épaisseur réduite par rapport à la jupe 227 pour être plus souple.

En variante l'épaisseur d'au moins une patte 244 est égale à l'épaisseur de la jupe 227. En variante toutes les pattes sont d'épaisseur réduites par rapport à l'épaisseur de la jupe 227, comme dans la figure 9.

Chaque patte 244 (figure 10) est issue par moulage de la jupe 227 en étant plus courte axialement que celle-ci. Elle est délimitée latéralement par une fente axiale borgne et est raccordée à son pied à une bande de matière moins haute que la jupe 227.
Le crochet 245 est plus épais que la patte 244 et constitue l'extrémité libre de la patte 244. Ce crochet 245 est délimité par une face transversale 248 destinée à venir en contact avec la face inférieure 246 du connecteur 113 la plus proche du plateau 3.

Le crochet 245 est également délimité par un chanfrein d'extrémité 249. Lors du montage du capot 27 sur le corps du connecteur 113, on exerce une pression axiale sur le capot 27 (voir flèche axiale de la figure 9) et le chanfrein 249 vient en prise avec la face supérieure 247 du connecteur 113, en sorte que la patte 244 se déploie latéralement (voir flèche latérale de la figure 9) pour pénétrer dans cette figure 9 dans l'évidement 144 de la saillie 148.

Le mouvement axial du capot 27 se poursuivant, le crochet 245 franchit la face inférieure 246 et revient à sa position initiale.

Lorsque l'effort sur le capot est supprimé la face transversale 248 du crochet 245 vient en prise avec la face inférieure 246 et le corps de la patte 244 coopère à la figure 9 avec le fond de l'évidement 144 de la saillie 148.

La largeur de la patte 244 est fonction de la distance entre les branches 344 délimitant latéralement l'évidement 144 en forme de U d'une saillie 148 afin que cette patte puisse pénétrer dans l'évidement 144. De même la largeur des fentes borgnes délimitant les pattes 244 est déterminée par la largeur des branches 344 pour que celles-ci puissent pénétrer dans les fentes.

Les branches 344 permettent donc d'immobiliser également les pattes et donc de bloquer en rotation le capot 27 en coopération avec les fonds des évidements des saillies 1148.

En ce qui concerne la saillie 147, la patte 244 vient en contact avec la face supérieure plane de cette saillie, tandis que le crochet de la patte 244 vient en prise par sa face transversale 248 avec la face inférieure 246 du connecteur 113.

On tire partie du fait que la face inférieure 246 du connecteur est décalée axialement par rapport au plateau 3 ce qui permet de loger les crochets 245.

Les pattes 244 ont une longueur suffisante pour pouvoir fléchir et sont ménagées.

On appréciera que les coefficients de dilatation du corps du connecteur 117 et du capot 27, tous deux en matière plastique, sont globalement égaux.

En variante la fixation du capot peut être réalisé à la faveur des ouvertures 5 de sorties d'air du capot. Dans ce cas le crochet 245 est admis par sa face 248 à coopérer avec la face interne 301 (figure 9) du plateau 3. Cette solution est moins satisfaisante car les crochets 245 sont alors implantés au voisinage du chignon 39 de la figure 1 et donc sujets à un échauffement en sorte que la fixation du capot est moins fiable.

En variante la fixation est réalisée par encliquetage du capot 27 à pattes 244 avec le dissipateur 9 doté de saillies du type des saillies 147, 148.

En variante les deux saillies 148 sont solidaires du dissipateur 9 et la saillie 147 du connecteur.

Cette solution est moins favorable car le dissipateur 9 est plus chaud que le capot 27.

Suivant une caractéristique le capot de forme creuse présente intérieurement trois cloisons 277 internes implantées chacune en vis-à-vis d'un bossage 272 de logement d'une sortie d'un enroulement d'une phase du bobinage de l'alternateur (figure 10). Deux de ces cloisons 277 internes sont reliées ensembles à l'une de leurs extrémités pour former un V. Une patte 244 est intercalée entre une première extrémité de l'ensemble de ces deux cloisons 277 internes et la troisième cloison 277 interne. Une autre patte 244 est implantée à l'autre extrémité de l'ensemble des deux cloisons 277.

Les deux cloisons 277 internes en forme de V sont donc implantées circonférentiellement entre deux pattes 244 d'encliquetage.

Ces cloisons 277 internes sont globalement perpendiculaires au fond 228 et venues de moulage avec le capot 27 en matière plastique. Elles sont implantées à l'extérieur des ouvertures 275 et à l'intérieur de la jupe 227, qui est globalement perpendiculaire au fond 228.

On notera, comme visible à la figure 8, que la périphérie externe du connecteur 113 est délimitée en partie par quatre pans 149 de longueur différente, qui s'étendent du premier trou 124, le plus proche de l'oreille 95', jusqu'à la saillie 147. Le premier pan 149 est prolongé par une partie globalement en arc de cercle terminée par l'oreille 95' et comprenant une saillie 148. Ce premier pan 149, adjacent au premier trou 124, est plus court que les autres pans et que le quatrième pan, le plus proche de la saillie 147, qui est plus long que les autres pans. La deuxième saillie 148 la plus éloignée de l'oreille 95' est implantée à la jonction de deuxième et troisième pans 149 et ce au voisinage du bossage intermédiaire 223.

Le premier pan 149 est plus court que les autres pans car à chacun de ces trois autres pans 149 il est prévu un crochet 114, qui s'étend en saillie vers l'extérieur, via sa portion d'enracinement, perpendiculairement par rapport à son pan 149.
La matière du corps du connecteur 113 est rognée à sa périphérie externe car les pans 149 permettent de diminuer la matière du corps du connecteur 113.
La périphérie externe du dissipateur 9 a une forme complémentaire à celle du connecteur 113.

Ainsi la plaque du dissipateur 9 comporte quatre pans complémentaires aux pans 149 et qui s'étendent depuis son oreille 94 jusqu'au voisinage du premier trou d'accès 111'. Ces quatre pans sont prolongés, pour gagner encore plus de matière, par un pan supplémentaire s'étendant jusqu'à la borne 117, puis par une partie en arc de cercle se raccordant à l'oreille 95. Les trois parois périphériques 91 à 93 s'étendent en saillies vers l'extérieur chacune par rapport au trois derniers pans.

On notera que le premier pan du dissipateur 9 est plus court que les autres pans en sorte que la première paroi 91 périphérique du dissipateur est conformée en conséquence. Cette paroi comporte deux portions, à savoir une première portion associée au deuxième pan du dissipateur et du connecteur et une deuxième portion, plus courte, associée au premier pan du dissipateur et du connecteur comme visible dans les figures 5 et 6. La deuxième et la troisième paroi, respectivement 92, 93, sont associées qu'à un seul pan.

Les trois parois périphériques 91 à 93 sont chacune dans le prolongement axial d'au moins un pan de la plaque du dissipateur et de la plaque du connecteur comme mieux visible dans les figures 5 et 6. Les parois 91 à 93 sont moins longues circonférentiellement que le ou leurs pans associé (s).

Les cloisons 277 internes sont de hauteur suffisante pour venir en vis-à-vis des parois 91 à 93, qui sont moins hautes que la jupe 227. Les cloisons 227 internes sont plus longues que les parois 91 à 93 et masquent celles-ci.

Le dissipateur 9 est donc compact à sa périphérie externe, tout comme le connecteur 113.

L'ensemble connecteur 113-dissipateur 9 présente donc à sa périphérie externe des pans comprenant les parois 91 à 93 comme mieux visible dans les figures 3, 4 et 11, les portion de fixation des crochets 114 étant en vis-à-vis de ces pans.
Plus précisément les saillies 148, 147 et les crochets 114 s'étendent en saillie vers l'extérieur par rapport à la périphérie externe du connecteur et du dissipateur.

Un espace existe entre la portion de fixation d'un crochet 114 et le pan 149 du connecteur 113 prolongé axialement par le pan et la paroi 91-93 concernée du dissipateur 9.
Chaque cloison 277 interne du capot 27 s'étend selon une caractéristique dans l'un des espaces précités pour isoler un pan 149 et la paroi concernée 91-93 du dissipateur 9 par rapport à la portion de fixation d'un crochet 114 qui ne sont pas au même potentiel électrique.
Les cloisons 277 sont donc chacune parallèle au pan concerné de l'ensemble connecteur 113-dissipateur 9.
Les cloisons 277 sont ici d'orientation tangentielle par rapport à un cercle passant par leur centre.
Ces cloisons 277 épouse chacune la forme du pan de l'ensemble connecteur 113- dissipateur concerné.
Elle traversent une ouverture radiale 5'.
Les zones d'enracinement des crochets 114 sont ici perpendiculaires aux cloisons 277, tandis que les portions de fixation des crochets sont globalement parallèles aux cloisons 277. En effet en variante les portions de fixation des crochets sont inclinées par rapport aux portions de fixation selon un angle voisin de 90° et supérieur à 90°.

Bien entendu les cloisons 277 internes, d'une part, sont moins hautes que la jupe 227 pour tenir compte de l'épaisseur des portions d'enracinement des crochets 114 et d'autre part, présentent une épaisseur inférieur à l'espace existant entre un pan 149 et la portion de fixation en vis-à-vis du crochet 114. Ainsi chaque portion de fixation d'un crochet 114 pénètre à isolation dans un bossage 272 pour sa fixation à une sortie d'un enroulement d'une phase du bobinage du stator.

Ces cloisons 277 sont des cloisons d'isolement et empêchent que des projections d'eau, notamment salées, ou de toutes autres souillures ne pénètrent dans l'ensemble dissipateur 9-connecteur 113.

On notera que les bossages 272 présentent à leur sommet une fente 281 permettant une évacuation des projections d'eau, notamment salée, ou des souillures.

Ils présentent également avantageusement latéralement des autres fentes 282 permettant également une évacuation des projections d'eau ou des souillures.

Ces cloisons 277 en matière plastique isolent également électriquement le dissipateur 9 et les portions de fixation des crochets 114 qui sont proches les unes des autres et à des potentiels électriques différents.
Ces cloisons 277 canalisent la circulation de l'air à la périphérie externe du dissipateur 9 en combinaison avec les parois périphériques 91 à 93.
Elles canalisent, selon une caractéristique, la circulation de l'air également entre les espaces libres, c'est-à-dire les couloirs de passage d'air ici transversaux,entre les cellules consécutives plus précisément :
entre la périphérie externe des parois 192' et 193 en vis-à-vis des cellules B et C entre lesquelles est implanté le deuxième trou 111',
entre la périphérie externe des parois 191' et 192 en vis-à-vis des cellules A et B entre lesquelles est implanté le trou médian 115'.
C'est pour cette raison que deux des cloisons 277 internes sont groupées pour former un V et épouser le contour allant de la paroi 92 de la deuxième cellule B à la paroi 93 de la dernière cellule C.
L'autre cloison épouse le contour de la portion la plus longue de la paroi 93, tandis que la jupe 227 épouse globalement le contour du reste de la périphérie externe du dissipateur 9 et ce en regard du premier trou 111'. Cette solution permet à l'ensemble dissipateur 9-connecteur 113 de rester compact à sa périphérie externe tout en faisant l'économie d'une pièce supplémentaire ou d'un surmoulage pour éviter la pénétration d'eau salée ou de toutes autre souillure et créer une isolation électrique ainsi qu'une canalisation de l'air.

On notera que le capot 27 présente intérieurement une bande de matière 278, globalement en forme de L, au niveau de son trou 273 de passage de la borne 117. capot pour canaliser intérieurement le passage d'air à la périphérie interne du premier trou 111'.

La bande 278 est issue par moulage du fond 228. Elle présente une tête d'extrémité, un tronçon interne dirigé vers l'intérieur et prolongé par un pied d'orientation circonférentielle.

La tête de la bande 278 est raccordée à la jupe 227. Cette bande 278 délimite le bord de trois ouvertures 275, respectivement externe, intermédiaire et interne. Ces ouvertures 275 sont, implantées radialement les unes au dessus des autres. Le tronçon interne délimite les bords radiaux alignés des ouvertures 275 externe et intermédiaire. Le pied de la bande 278 délimite le bord circonférentiel commun aux ouvertures intermédiaire et interne.

Ainsi l'air est canalisé en sorte qu'un premier flux d'air traversera les ouvertures externe et intermédiaire tandis qu'un autre flux d'air distinct traversera l'ouverture interne. Les ouvertures externe et intermédiaires sont implantées en regard du premier trou 111', qui est en regard du trou 124 associé du connecteur 113 comme visible dans les figures 2 à 4. La queue 111 de la diode 10 implantée dans ces ouvertures 111', 124 sera donc bien refroidie.
La hauteur de la bande 278 est inférieure à celle de la jupe 227.

Cette bande 278 permet en combinaison avec la paroi transversale 191 de la première cellule A du dissipateur 9 de canaliser intérieurement le passage d'air pour que l'air balaye bien le dissipateur 9 au niveau du premier trou 111'adjacent à la borne 117.
Cette bande rigidifie également le capot au niveau de la borne 117.

Il existe également une patte 279 issue par moulage du fond 228 pour également canaliser l'air au niveau de la périphérie interne du deuxième trou d'accès ouverture 111'.

Cette patte 279 est délimite le bord commun à une ouverture intermédiaire et interne comme le pied de la bande 278. Elle est implantée à la périphérie interne du dissipateur positif 9 entre les cloisons 192', 193 en vis-à-vis des cellules B et C c'est-à-dire à la périphérie interne du couloir de passage d'air entre les cellules C, B. Cette patte 279 ferme ce couloir de passage d'air.

La patte 279 est globalement d'orientation axiale, c'est-à-dire globalement perpendiculaire au fond 228.

Elle permet, en combinaison avec deux parois transversales 192', 193 en vis à vis de la deuxième et de la troisième cellule du dissipateur de canaliser le passage d'air pour que l'air balaye bien le dissipateur au niveau de son deuxième trou 111'.

Les parois 192' et 193 sont globalement parallèles entre elles.

Cette disposition est avantageuse car ces parois délimitent un couloir transversal de passage d'air utilisé pour le passage d'une électrode de soudage de la queue 111 de la deuxième diode négative. L'électrode peut donc se déplacer transversalement ce qui facilite le soudage et la rapidité de soudage.

Un autre couloir de passage transversal de l'électrode de soudage est également présent entre la paroi 191 de la première cellule et la surépaisseur 217.

La queue 111 de la diode extrême 10 est également accessible.

La solution selon l'invention facilite donc le soudage des queues des diodes négatives. Elle rend ce soudage plus rapide et plus aisé, aucun obstacle ne gênant le déplacement transversal de l'électrode.

Bien entendu lorsque la fixation des queues 111 des diodes 10 est réalisée par sertissage cette opération est facilitée par la configuration du dissipateur et du connecteur.

On notera que la jupe 227 présente des parties rectilignes au niveau de l'ouverture 274 pour épouser au plus près la forme de l'ensemble régulateur de tension - porte-balais. Cette disposition empêche également le capot de tourner.

On notera que le logement 271 est délimité à l'intérieur du capot 27 par une paroi 280 qui épouse la forme du porte-balais pour logement de celui-ci à étanchéité. Cette paroi 280 ainsi que l'ouverture 273 de passage de la borne 117 empêche également le capot de tourner en coopération avec la borne 117 et le porte-balais.

Les ouvertures 275 de passage d'air sont réparties selon trois séries d'ouvertures externes, intermédiaires et internes réparties les unes au dessus des autres. Chaque série est délimitée par deux anneaux de matière d'orientation circonférentielle et par une pluralité de bras s'étendant entre les deux anneaux de matière comme visible dans les figures 7 et 10. Le fond du capot 27 est ainsi grillagé.
La série d'ouvertures 275 la plus externe permet un accès de l'air de manière précitée aux trous 111', 124, ainsi qu'aux trous externes 300 et aux ailettes externes 400. Les trous externes 300 permettent également de réduire le poids du dissipateur 9

La série d'ouvertures médianes permet l'accès de l'air au corps des diodes positives 8 et également aux trous 111', 124.

La série d'ouvertures la plus interne permet l'accès de l'air aux prolongements internes des parois transversales 191-191', 192-192', 193-193' ainsi qu'aux ailettes internes supplémentaires 200.

La série d'ouvertures 275 la plus interne est en regard des ouvertures 7 d'entrée d'air, ainsi que les ailettes internes 200 et les prolongements internes des paroi transversales.

Les parois périphériques 91 à 93, les parois transversales 191 à 193', les ailettes externes 400 et les ailettes internes 200 ont la même hauteur pour qu'un faible jeu axial existe par rapport au fond du capot 27 pour bien canaliser le passage de l'air.
Une circulation d'air est engendrée par la rotation du ventilateur 104 de la figure 1.

Cela est rendu possible du fait, de manière précitée, de la présence des trous d'entrée d'air 7 et du contact local en trois points entre le dissipateur 9 et les bossages 223 saillants par rapport à la face supérieure 247 du corps du connecteur 113.

On notera (figure 5) que le dissipateur 9 présente à sa périphérie externe deux murets externes 98 de rigidification, qui sont moins haut que les parois 91 à 93 et qui relient respectivement entre elles les parois 92 et 93 de la deuxième et de la troisième cellule et la paroi 91 de la première cellule à la surépaisseur 217 portant la cheminée 117' de montage de la borne 117. Ces murets 98, de plus faible hauteur que les parois des cellules, permettent une bonne tenue du dissipateur à la chaleur et délimitent extérieurement les couloirs de passage d'air respectivement entre les cellules C, B et B,A.
Ce dissipateur 9 présente également à sa périphérie interne, pour les mêmes raisons que les murets 98, trois murets 99 de rigidification et de tenue à la chaleur implantés respectivement entre la surépaisseur 217 et la paroi transversale 191 de la première cellule, entre la paroi transversale 191' de la première cellule et la paroi transversale 192 en vis-à-vis de la deuxième cellule et enfin entre la paroi transversale 192' de la deuxième cellule et la paroi transversale en vis-à-vis 193 de la troisième cellule. La face supérieure, la plus éloignée du plateau 3, du corps en forme de plaque du dissipateur 9 porte donc des parois 91, 93 et des murets 98, 99 qui font saillie ici perpendiculairement à cette face et s'étendent circonférentiellement pour délimiter ici en partie la périphérie externe et interne du dissipateur 9. Les murets 99, de plus faible hauteur que les parois des cellules, délimitent intérieurement les couloirs de passage d'air respectivement entre les cellules C, B et B, A.

La face supérieure de la plaque du dissipateur 9 porte également les paires de parois transversales 191-191', 192-192', 193- 193', les ailettes externes 400 et internes 200 qui font saillie perpendiculairement à cette face et qui s'étendent transversalement de la périphérie externe à la périphérie interne de la plaque du dissipateur 9.

En variante on incline, par exemple les ailettes internes et/ou externes, ou les parois transversales et /ou les parois périphériques par rapport à la face supérieure du dissipateur.

Dans tous les cas les parois et les ailettes s'étendent en saillie vers l'extérieur par rapport à la face supérieure du dissipateur et permettent globalement de ne pas augmenter l'épaisseur du dissipateur, qui dans le cadre de diodes emmanchées à force dans les trous 8', pour des alternateurs de petite taille et un ventilateur de diamètre externe de 82 à 92 mm, globalement égal au diamètre externe du rotor de la figure 1, peut avoir une épaisseur comprise entre 3 et 5 mm.
En variante les diodes sont brasées sur le dissipateur et/ou sur le plateau 3,comme décrit par exemple dans le document FR 2 734 427,en sorte que le corps des diodes n'est pas forcément moleté et que la présence des trous 8' n'est pas obligatoire.
Dans ce cas l'épaisseur du dissipateur 9 est l'ordre de 1 à 3 mm.

L'épaisseur du dissipateur pour des alternateurs de petite taille et un ventilateur de diamètre externe de 82 à 92 mm, globalement égal au diamètre externe du rotor de la figure 1, est donc comprise entre 1 et 5 mm.

La solution représentée dans les figures est optimale.

Ainsi la température atteinte par la diode positive extrême (la plus chaude et la plus proche de l'oreille 94) est inférieure de 8° par rapport à celle d'une solution l'art antérieur et ce pour une température ambiante de 105°.

La diode extrême est avantageusement une diode économique qui ne dépasse pas sa température critique de 215°.

Plus précisément cette température critique de 215° correspond au cas ou, pour augmenter la puissance de l'alternateur en diminuant les fuites magnétiques, le rotor à griffes est équipé d'aimants permanent entre ces griffes 68, 70, comme dans le document FR 2905806.

Bien entendu l'invention est applicable à un alternateur de plus grande taille.

Grâce à l'invention les diodes positives sont bien refroidies et l'on réalise un compromis entre la tenue mécanique, le coût de la matière et la surface d'échange de chaleur.

En outre le dissipateur est perméable grâce notamment aux trous 300 et on facilite la fixation des queues des diodes négatives, notamment par soudage, ainsi que le vissage des vis grâce aux espaces existants entre deux cellules consécutives et entre la cellule A et la borne 117.

De plus les cloisons 277 internes du capot de forme creuse, permettent en combinaison avec la bande de matière 278 et la patte 279, implantée entre les cloisons 192', 193 à la périphérie interne de celles-ci, de bien canaliser le flux d'air au niveau des queues 111 des diodes 10.

Les cloisons 277 internes épousent la forme des pans de l'ensemble connecteur-dissipateur et s'étendent chacune de part et d'autre d'un crochet.

Les cloisons 277, ici d'orientation tangentielle, et les pans concernés sont ici rectilignes et donc de forme simple.

Le capot ne présente pas également de prolongement pénétrant dans une ouverture de passage d'une sortie de phase réalisée dans le plateau 3 en sorte qu'il est simplifié. Il en est de même du connecteur.

Le dissipateur à cellule permet également de répondre aux souhaits des différents constructeurs de véhicules automobiles et d'appliquer aisément la solution au cas ou la borne 117, dite borne B+ est d'orientation radiale comme visible à la figure 13.

Dans ce cas on conserve les cellules A, B, C et la première extrémité circonférentielle 95 du dissipateur 9. On prolonge ce dissipateur 9 au niveau de sa deuxième extrémité circonférentielle pour qu'il présente au voisinage de cette deuxième extrémité circonférentielle une cheminée 217' d'orientation radiale en association avec un point de fixation supplémentaire réalisé à l'aide d'une oreille trouée du type de l'oreille 94 des figure 5 et 6, constituant la deuxième extrémité circonférentielle du dissipateur.

Ce point de fixation supplémentaire est réalisé à la faveur de cette oreille trouée et de la cheminée supplémentaire taraudée 600 de la figure 11. Cette fixation est réalisée comme pour la fixation de l'oreille 94 à l'aide d'une vis 115 et d'un manchon isolant supplémentaire 215.

Le plateau du palier de la figure 11 est donc adapté à plusieurs applications.

La cheminée 217' est destinée au montage de la borne de connexion 117 des figures précédentes qui sort radialement de la cheminée radiale 217'. Cette borne 117 est ici, de manière précitée, une vis dont la tête est de forme polygonale, carrée, rectangulaire ou présente au moins un méplat. La base de la cheminée 217'est conformée en conséquence pour recevoir à coopération de formes la tête de la vis.

En considérant les figures 2 à 11, on prolonge l'oreille 94 par une portion 294 qui porte la cheminée radiale 217' et se termine par une oreille de fixation trouée du type de l'oreille 94.

Le prolongement 294 est protégé par la cloison 277 interne associée à la cellule C.

Dans ce cas le dissipateur comporte quatre points de fixation et la deuxième extrémité 113a du connecteur est rallongée vers l'extérieur pour passer sous la portion 294 et présenter une saillie 148.

Le dissipateur 9 est dans ce cas plus long circonférentiellement que le connecteur 113. Dans ce mode de réalisation l'implantation des équerres 134 et 142 étant inchangée, ainsi que celle des oreilles 95' et 143. Il en est de même de la périphérie interne du connecteur 113.

Dans tous les cas le dissipateur 9 comporte une première extrémité circonférentielle 95, ici superposée à une première extrémité circonférentielle 95' du connecteur 113, et l'une C des cellules, dite cellule d'extrémité, la plus proche de la deuxième extrémité circonférentielle du dissipateur 9, comporte un nombre supérieur d'ailettes supplémentaires 200 à celui des autres cellules de refroidissement.

Cette cellule C comporte une paroi transversale 193'de forme tortueuse pour le vissage de la vis 115 à la faveur d'un trou de passage 115' réalisé dans le dissipateur et adjacent à la paroi 193'.

Bien entendu en variante les pans de l'ensemble dissipateur- connecteur peuvent avoir une autre forme.

Ainsi tous les pans de cet ensemble n'ont pas forcément une forme rectiligne. Ainsi au moins un pan peut avoir une forme bombée convexe, c'est-à-dire une forme courbe. Dans ce cas la cloison associée présente une forme concave complémentaire pour épouser la forme du pan convexe.

La forme concave de la cloison interne est obtenue aisément par moulage. L'une au moins des cellules, telle que la cellule A, peut donc en variante comporter une paroi périphérique bombée de forme convexe, c'est-à-dire une paroi de forme courbe.

Ainsi toutes les cloisons 277 internes n'ont pas forcément la même forme.

Bien entendu l'invention est applicable à d'autres types de dissipateur 9 et de connecteur 113.

Il suffit que l'ensemble connecteur-dissipateur présente des pans et des crochets à sa périphérie externe comme par exemple dans les figures 2 à 11.

Ainsi en variante les diodes 8 ne sont pas montées dans des cellules et peuvent ne pas être toutes implantées à la périphérie externe du dissipateur.

Bien entendu la présente invention n'est pas limitée aux exemples de réalisation décrits.
Ainsi en variante le nombre de paires d'éléments de redressement de courant est supérieur à trois, par exemple à quatre en sorte que le dissipateur présente en variante quatre cellules de refroidissement.
En variante on supprime en partie la bande de matière 278 en conservant uniquement sa partie circonférentielle et on ajoute une paroi transversale parallèle à la paroi 191 pour créer un deuxième couloir comme celui entre les cloisons 192', 193.
En variante les parties apparentes 134, 142 ont une autre forme. Par exemple la portion terminale de fixation de ces parties est en variante inclinée par rapport à la portion d'enracinement de ces parties. En variante les portions d'enracinement sont dans le prolongement des portions terminales.
En variante au moins un crochet 114 de fixation d'une sortie de phase a une forme différente d'une équerre. Par exemple on peut concevoir une réalisation dans laquelle les sorties 214 des phases seraient inclinées, voir pliées à 90°. Dans ce cas la portion de fixation d'un crochet forme un angle supérieur à 90° avec sa portion d'enracinement ou est alignée avec sa portion d'enracinement.
On peut selon les applications, combiner des crochets en forme d'équerre avec des crochets de forme différente. Dans les figures les longueurs des queues des diodes sont identiques. En variante les queues des diodes sont de longueur différente.
En variante l'une aux moins des paires de diodes 8, 10 ne présente pas de queues ; les parties apparentes 134, 142 étant alors prolongées et configurées en conséquence.
Les diodes 8 et /ou 10 sont en variante, de manière précitée, fixées par brasage respectivement sur le dissipateur 9 et sur le plateau 3.
Dans les figures les diodes 10 sont portées directement par le plateau 3. En variante les diodes 10 sont portées indirectement par le plateau en étant montées sur un secteur annulaire fixé sur le plateau 3.
La présence de trous de montage des diodes 10 dans le plateau 3 n'est donc pas obligatoire.
Dans tous les cas les diodes négatives 10 et positives 8 sont portées respectivement par le plateau 3 et par le dissipateur.

En variante l'agencement 1 est applicable également aux "alterno-démarreurs" de véhicules automobiles ou aux, qui sont des alternateurs réversibles aptes à fonctionner alternativement comme un alternateur générateur de courant et comme moteur électrique notamment de démarreur. Pour plus de précisions, on se reportera à la demande WO 01/69762. Cet alterno-démarreur a la structure d'un alternateur classique et présente des moyens de suivi de la rotation du rotor pour injecter du courant dans le bobinage du stator au lorsque la machine fonctionne en mode moteur électrique.

Les éléments de redressement de courant 8, 10 consistent donc en variante en des transistors du type MOSFET.

La présence de la résine 50, des tampons 34 et du joint 46 de la figure n'est pas obligatoire et en variante le montage du corps 19 dans les paliers 16, 18 est rigide.
En variante le rotor de la machine est à pôles saillants comme décrit dans le document WO 02/054566.

En variante, pour augmenter la puissance de la machine, le rotor de la machine est équipé d'aimants permanents comme décrit dans ce document WO 02/0546 ou de manière précitée dans le document FR 2905806 décrivant une variante d'assemblage du rotor à griffes avec l'arbre de ce rotor.

Cela est rendu possible grâce à l'invention qui permet de mieux évacuer la chaleur due à l'augmentation de puissance, notamment au niveau des diodes positives 8.

En variante le ventilateur 102, moins puissant que le ventilateur 104 de la figure 1 est supprimé.

En variante le palier avant comporte un canal pour circulation d'un fluide de refroidissement en sorte que le palier avant est refroidi par la circulation de ce fluide de refroidissement, tandis que le palier arrière et l'agencement de redressement de courant sont refroidis par la circulation de l'air provoqué par le ventilateur arrière.

L'un au moins des deux paliers est en variante non ajouré. Bien entendu le carter de la machine peut comporter une pièce intermédiaire portant intérieurement le stator et intercalée entre les paliers avant et arrière.

En variante un unique ventilateur est implanté à l'extérieur au niveau de la poulie et l'air traverse axialement l'alternateur à la faveur des ouvertures d'entrée d'air ménagées dans les plateaux des paliers en sorte que les paliers avant et arrière sont en variante dépourvus à leur périphérie externe de sortie d'air 5.
En variante le ventilateur est remplacé par une pompe centrifuge montée dans un logement réalisé à l'arrière de l'alternateur comme décrit dans le document FR 2 744575. Le carter présente dans ce cas des canaux qui débouchent par une extrémité interne dans le logement de la pompe centrifuge et par une extrémité avant à l'extérieur de l'alternateur. Ainsi la pompe aspire de l'air à l'intérieur de l'alternateur et le refoule à l'extérieur par les canaux.
Les paliers ne comportent pas dans ce cas un rebord avec des ouvertures latérales de sortie d'air.

En variante l'agencement de redressement de courant et le capot de protection sont portés par le palier avant comme décrit dans le document FR 2 744575.
A la lumière de ce document on voit qu'en variante l'alternateur est dépourvu de balais.
L'un des paliers, en variante est constitué par un plateau.
Ainsi qu'il ressort de la description et des dessins des espaces libres et donc des couloirs de passage existant entre deux cellules consécutives.
Les cloisons du capot canalisent le couloir de passage d'air entre deux cellules consécutives.
Ces couloirs n'ont pas ici la même forme l'un est délimité par deux parois transversales parallèles 192', 193 l'autre par deux parois transversales divergentes 191', 192. Tous cela dépend des applications et notamment de la forme des ailettes internes.
Ces couloirs sont utilisés pour respectivement le passage d'une visseuse et d'une électrode de soudage.
On appréciera que les parois saillantes des cellules ont une grande hauteur, ici supérieure à la hauteur des têtes des organes de fixation. Les parois des cellules et les ailettes sont saillantes par rapport au corps en forme de plaque du dissipateur positif, ce corps constituant le fond des cellules et des couloirs de passage entre les cellules. Le dissipateur positif 9 a une forme simple, il est léger et d'un encombrement circonférentiel réduit. Bien entendu la solution dans laquelle le dissipateur de chaleur négatif est constitué par le palier de l'alternateur est d'un encombrement axial réduit.
Bien entendu on peut modifier le dissipateur du document JP 20086228488 pour que celui-ci présente à sa périphérie externe des pans en combinaison, d'une part, avec un connecteur présentant des pans à sa périphérie externe munis chacun d'un crochet de fixation d'une sortie de phase et d'autre part d'un capot à cloisons internes implantés à l'intérieur de la jupe du capot.
Le couvercle est « économique et a une forme plus simple que le capot à cheminées des figures 13 à 15 du document EP 2 091 136 précité.

## Revendications

1. Machine électrique tournante polyphasée, notamment un alternateur pour véhicule automobile, du type comprenant un carter (16, 18) abritant un stator comprenant un bobinage de stator (23) à plusieurs sorties (214) de phase, un palier (16, 18) appartenant au carter et comportant un plateau (3) ajouré muni d'ouvertures (5) de passage des sorties des phases, un dissipateur de chaleur (9), dit dissipateur de chaleur positif, électriquement conducteur en forme de plaque solidaire du palier (16, 18) et portant des premiers éléments de redressement de courant (8), tels que des diodes, des seconds éléments de redressement de courant (10), tels que des diodes, portés par le plateau (3) du palier (16, 18), un connecteur (113) intercalé entre le dissipateur (9) et le plateau (3) et un capot de protection (27) en matière électriquement isolante coiffant les sorties des phases ainsi que le connecteur et le dissipateur, dans lequel le connecteur (113) présente à sa périphérie externe des crochets de fixation (114) des sorties des phases saillants vers l'extérieur et présentant une portion d'enracinement pénétrant dans le corps du connecteur et prolongée par une portion de fixation d'une sortie de phase, **caractérisée en ce que** l'ensemble dissipateur de chaleur (9) -connecteur (113) présente à sa périphérie externe des pans (149, 91 à 93) munis chacun d'un crochet (114) de fixation d'une sortie de phase, **en ce que** le capot (27) présente intérieurement des cloisons (277) internes, qui épousent la forme des pans et **en ce que** chaque cloison (277) interne s'étend dans l'espace délimité par la portion de fixation d'un crochet (114) et le pan (149) concerné de l'ensemble dissipateur-connecteur et **en ce que** le connecteur comprend en outre sur sa périphérie interne des autres crochets (142) dégagés ayant globalement une forme d'équerre, ladite périphérie interne du connecteur a une forme sinusoïdale entre une extrémité (113a) du connecteur et le crochet le plus éloigné de ladite extrémité (113a) parmi lesdits autres crochets (142) dégagés de la périphérie interne.

2. Machine selon la revendication 1, **caractérisée en ce qu'**il est prévu une cloison (277) interne par crochet (114).

3. Machine selon la revendication 1 ou 2, **caractérisée en ce qu'**au moins une cloison (277) interne et son pan associé (149,91-93) sont rectilignes.

4. Machine selon la revendication 3, **caractérisée en ce qu'**au moins une cloison (277) interne et son pan (149, 91-93) ont une forme bombée.

5. Machine selon l'une quelconque des revendications précédentes, **caractérisée en ce que** le capot (27) est en matière plastique, **en ce que** le capot (27) est de forme creuse et présente un fond (228) prolongé a sa périphérie externe par une jupe (227) globalement perpendiculaire au fond (228) du capot (27) et dotée localement de bossages (272) dans chacun desquels pénètre une sortie de phase et **en ce que** les cloisons (277) internes sont implantées chacune en vis-à-vis d'un bossage (272).

6. Machine selon la revendication 5, **caractérisée en ce que** les cloisons (277) internes sont moins hautes que la jupe (227) du capot (27).

7. Machine selon l'une quelconque des revendications 5 et 6, **caractérisée en ce que** le fond (228) du capot (27) présente une pluralité d'ouvertures (275) de passage d'air et **en ce que** les cloisons (277) internes sont implantées a l'extérieur des ouvertures (275) et à l'intérieur de la jupe (227).

8. Machine selon l'une quelconque des revendications précédentes, **caractérisée en ce que** le connecteur (113) présente a sa périphérie externe des saillies (147, 148) destinées a la fixation par encliquetage du capot présentant pour ce faire des pattes d'encliquetage (244) pour coopérer chacune avec une saillie.

9. Machine selon la revendication 8 prise en combinaison avec la revendication. 5, **caractérisée en ce que** les pattes d'encliquetage (244) du capot sont issues de la jupe (227) du capot.

10. Machine selon la revendication 9, **caractérisée en ce que** deux cloisons (277) internes sont reliées ensembles pour former un V et **en ce que** ces deux cloisons internes (277) sont implantées circonférentiellement entre deux pattes d'encliquetage (244) du capot (27).

11. Machine selon la revendication 10, **caractérisée en ce qu'**une patte d'encliquetage est intercalée entre les deux cloisons (277) internes en forme de V et une troisième cloison.

12. Machine selon l'une quelconque des revendications précédentes, **caractérisée en ce que** chaque pan du dissipateur (9) comporte une paroi périphérique saillante (91 à 93) implantée a la périphérie externe du dissipateur.

13. Machine selon la revendication 12, **caractérisée en ce que** les premiers éléments de redressement de courant (8) sont montés chacun a la périphérie interne du dissipateur (9) et sont implantés chacun dans une cellule de refroidissement (A,B,C) délimitée par une paroi périphérique saillante (91 à 93) du dissipateur (9) et latéralement par deux parois transversales saillantes (191-191', 192-192' , 193- 193') s'étendant de la périphérie externe à la périphérie interne du dissipateur (9), **en ce que** chaque cellule comporte au moins un trou externe (300) délimité par la périphérie interne de la paroi périphérique (91-93) de la cellule pour créer une continuité de matière entre le premier élément de redressement de courant (8) et la paroi périphérique (91-93) concernés, et **en ce qu'**un couloir de passage d'air existe entre deux parois transversales en vis-a-vis de deux cellules consécutives (C,B -B,A).

14. Machine selon la revendication 13, **caractérisée en ce que** le connecteur (113) présente trois bossages (223) pour contact local avec la face inférieure du dissipateur et création d'un jeu entre les corps globalement en forme de plaque du dissipateur et du connecteur.

15. Machine selon l'une quelconque des revendications précédentes, **caractérisée en ce que** les crochets (114) sont globalement en forme d'équerre.

## Patentansprüche

1. Mehrphasige drehende elektrische Maschine, insbesondere Wechselstromgenerator für Kraftfahrzeug, des Typs, der umfasst: ein Gehäuse (16, 18), das einen Stator aufnimmt, der eine Statorwicklung (23) mit mehreren Phasenausgängen (214) aufweist, ein Lager (16, 18), das zu dem Gehäuse gehört und eine Lochplatte (3) aufweist, die mit Öffnungen (5) für den Durchgang der Phasenausgänge versehen ist, eine Wärmeabführeinrichtung (9), die positive Wärmeabführeinrichtung genannt wird, ein elektrischer Leiter in Form einer mit dem Lager (16, 18) fest verbundenen Platte ist und erste Stromgleichrichterelemente (8) wie etwa Dioden, zweite Stromgleichrichterelemente (10) wie etwa Dioden, die von der Platte (3) des Lagers (16, 18) getragen werden, einen zwischen die Abführeinrichtung (9) und die Platte (3) eingefügten Verbinder (113) und eine Schutzhaube (27) aus elektrisch isolierendem Material, die die Phasenausgänge sowie den Verbinder und die Abführeinrichtung abdeckt, trägt, wobei der Verbinder (113) an seinem äußeren Umfang Befestigungshaken (114) für die Phasenausgänge aufweist, die nach außen vorstehen und einen Anschlussabschnitt aufweist, der in den Körper des Verbinders eindringt und durch einen Abschnitt für die Befestigung eines Phasenausgangs verlängert ist, **dadurch gekennzeichnet, dass** die Gesamtheit aus Wärmeabführeinrichtung (9) und Verbinder (113) an ihrem äußeren Umfang Felder (149, 91 bis 93) aufweist, die jeweils mit einem Haken (114) für die Befestigung eines Phasenausgangs versehen sind, dass die Haube (27) innen innere Trennwände (277) aufweist, die sich an die Form der Felder anschmiegen, und dass sich jede innere Trennwand (277) in den Raum erstreckt, der durch den Befestigungsabschnitt eines Hakens (114) und das betreffende Feld (149) der Gesamtheit aus Abführeinrichtung und Verbinder begrenzt ist, und dass der Verbinder außerdem an seinem inneren Umfang andere Haken (142) aufweist, die außer Eingriff sind und insgesamt eine rechtwinklige Form haben, wobei der innere Umfang des Verbinders zwischen einem Ende (113a) des Verbinders und dem Haken, der unter den anderen Haken (142), die außer Eingriff mit dem inneren Umfang sind, von dem Ende (113a) am weitesten entfernt ist, eine Sinusform besitzt.

2. Maschine nach Anspruch 1, **dadurch gekennzeichnet, dass** pro Haken (114) eine innere Trennwand (277) vorgesehen ist.

3. Maschine nach Anspruch 1 oder 2, **dadurch gekennzeichnet, dass** wenigstens eine innere Trennwand (277) und ihr zugeordnetes Feld (149, 91-93) geradlinig sind.

4. Maschine nach Anspruch 3, **dadurch gekennzeichnet, dass** wenigstens eine innere Trennwand (277) und ihr Feld (149, 91-93) eine bauchige Form haben.

5. Maschine nach einem der vorhergehenden Ansprüche, **dadurch gekennzeichnet, dass** die Haube (27) aus Kunststoff ist, dass die Haube (27) eine hohle Form besitzt und einen Boden (228) aufweist, der an seinem äußeren Umfang durch eine zu dem Boden (228) der Haube (27) im Allgemeinen senkrechte Schürze (227) verlängert ist und lokal mit Erhebungen (272) versehen ist, in die jeweils ein Phasenausgang eindringt, und dass die inneren Trennwände (277) jeweils gegenüber einer Erhebung (272) eingesetzt sind.

6. Maschine nach Anspruch 5, **dadurch gekennzeichnet, dass** die inneren Trennwände (277) weniger hoch sind als die Schürze (227) der Haube (27).

7. Maschine nach einem der Ansprüche 5 und 6, **dadurch gekennzeichnet, dass** der Boden (228) der Haube (27) mehrere Luftdurchgangsöffnungen (275) aufweist und dass die inneren Trennwände (277) außerhalb der Öffnungen (275) und innerhalb der Schürze (227) eingesetzt sind.

8. Maschine nach einem der vorhergehenden Ansprüche, **dadurch gekennzeichnet, dass** der Verbinder (113) an seinem äußeren Umfang Vorsprünge (147, 148) aufweist, die für eine Befestigung durch Einrasten der Haube bestimmt sind, die hierzu Einrastlaschen (244) aufweist, um jeweils mit einem Vorsprung zusammenzuwirken.

9. Maschine nach Anspruch 8 in Kombination mit Anspruch 5, **dadurch gekennzeichnet, dass** die Einrastlaschen (244) der Haube von der Schürze (227) der Haube ausgehen.

10. Maschine nach Anspruch 9, **dadurch gekennzeichnet, dass** zwei innere Trennwände (277) miteinander verbunden sind, um ein V zu bilden, und dass diese zwei inneren Trennwände (277) in Umfangsrichtung zwischen zwei Einrastlaschen (244) der Lasche (27) eingesetzt sind.

11. Maschine nach Anspruch 10, **dadurch gekennzeichnet, dass** eine Einrastlasche zwischen zwei innere Trennwände (277) in V-Form und eine dritte Trennwand eingefügt ist.

12. Maschine nach einem der vorhergehenden Ansprüche, **dadurch gekennzeichnet, dass** jedes Feld der Abführeinrichtung (9) eine vorstehende Umfangswand (91-93) aufweist, die am äußeren Umfang der Abführeinrichtung eingesetzt ist.

13. Maschine nach Anspruch 12, **dadurch gekennzeichnet, dass** die ersten Stromgleichrichterelemente (8) jeweils am inneren Umfang der Abführeinrichtung (9) montiert sind und jeweils in eine Kühlzelle (A, B, C) eingesetzt sind, die durch eine vorstehende Umfangswand (91 bis 93) der Abführeinrichtung (9) und seitlich durch zwei vorstehende transversale Wände (191-191', 192-192', 193-193'), die sich vom äußeren Umfang zum inneren Umfang der Abführeinrichtung (9) erstrecken, begrenzt ist, dass jede Zelle wenigstens ein äußeres Loch (300) aufweist, das durch den inneren Umfang der Umfangswand (91-93) der Zelle begrenzt ist, um zwischen dem ersten Stromgleichrichterelement (8) und der betreffenden Umfangswand (91-93) unterbrechungsfreies Material zu schaffen, und dass zwischen zwei transversalen Wänden gegenüber zwei aufeinander folgenden Zellen (C, B-B, A) ein Luftdurchgangskanal vorhanden ist.

14. Maschine nach Anspruch 13, **dadurch gekennzeichnet, dass** der Verbinder (113) drei Erhebungen (223) für einen lokalen Kontakt mit der unteren Fläche der Abführeinrichtung und für die Erzeugung eines Spiels zwischen den im Allgemeinen plattenförmigen Körpern der Abführeinrichtung und dem Verbinder aufweist.

15. Maschine nach einem der vorhergehenden Ansprüche, **dadurch gekennzeichnet, dass** die Haken (114) im Allgemeinen eine rechtwinklige Form haben.

## Claims

1. Multiphase rotating electric machine, notably an alternator for a motor vehicle, of the type comprising a housing (16, 18) housing a stator comprising a stator winding (23) with a plurality of phase outputs (214), a bearing (16, 18) belonging to the housing and comprising an open-work plate (3) provided with openings (5) for the passage of the phase outputs, a heat dissipator (9), called positive heat dissipator, electrically conductive in plate form securely attached to the bearing (16, 18) and bearing first current rectifying elements (8), such as diodes, second current rectifying elements (10), such as diodes, borne by the plate (3) of the bearing (16, 18), a connector (113) inserted between the dissipator (9) and the plate (3) and a protective cover (27) made of electrically insulating material covering the phase outputs as well as the connector and the dissipator, in which the connector (113) has, at its outer periphery, fastening hooks (114) for the phase outputs protruding outwards and having a rooting portion penetrating into the body of the connector and extended by a phase output fastening portion, **characterized in that** the heat dissipator (9) - connector (113) assembly has, at its outer periphery, flats (149, 91 to 93) each provided with a phase output fastening hook (114), **in that** the cover (27) has, internally, internal partitions (277), which closely follow the form of the flats and **in that** each internal partition (277) extends into the shape delimited by the fastening portion of a hook (114) and the relevant flat (149) of the dissipator-connector assembly and **in that** the connector also comprises, on its internal periphery, other free hooks (142) having an overall bracket form, said internal periphery of the connector has a sinusoidal form between an end (113a) of the connector and the hook furthest away from said end (113a) out of said other free hooks (142) of the internal periphery.

2. Machine according to Claim 1, **characterized in that** an internal partition (277) is provided for each hook (114).

3. Machine according to Claim 1 or 2, **characterized in that** at least one internal partition (277) and its associated flat (149, 91-93) are rectilinear.

4. Machine according to Claim 3, **characterized in that** at least one internal partition (277) and its flat (149, 91-93) have a domed shape.

5. Machine according to any one of the preceding claims, **characterized in that** the cover (27) is made of plastic material, **in that** the cover (27) is of hollow form and has a bottom (228) extended at its outer periphery by a skirt (227) which is globally at right angles to the bottom (228) of the cover (27) and provided locally with bosses (272) into each of which penetrates a phase output and **in that** the internal partitions (277) are each located facing a boss (272).

6. Machine according to Claim 5, **characterized in that** the internal partitions (277) are less high than the skirt (227) of the cover (27).

7. Machine according to any one of Claims 5 and 6, **characterized in that** the bottom (228) of the cover (27) has a plurality of openings (275) for the passage of air and **in that** the internal partitions (277) are located outside the openings (275) and inside the skirt (227).

8. Machine according to any one of the preceding claims, **characterized in that** the connector (113) has, at its outer periphery, protuberances (147, 148) intended for the fastening of the covering by latching, having, for this, latching tabs (244) for each to cooperate with a protuberance.

9. Machine according to Claim 8 taken in combination with Claim 5, **characterized in that** the latching tabs (244) of the cover are derived from the skirt (227) of the cover.

10. Machine according to Claim 9, **characterized in that** two internal partitions (277) are linked together to form a V and **in that** these two internal partitions (277) are located circumferentially between two latching tabs (244) of the cover (27).

11. Machine according to Claim 10, **characterized in that** a latching tab is inserted between the two internal partitions (277) in V form and a third partition.

12. Machine according to any one of the preceding claims, **characterized in that** each flat of the dissipator (9) comprises a protruding peripheral wall (91 to 93) located at the outer periphery of the dissipator.

13. Machine according to Claim 12, **characterized in that** the first current rectifying elements (8) are each mounted on the internal periphery of the dissipator (9) and are each located in a cooling cell (A, B, C) delimited by a protruding peripheral wall (91 to 93) of the dissipator (9) and laterally by two protruding transversal walls (191-191', 192-192', 193-193') extending from the outer periphery to the internal periphery of the dissipator (9), **in that** each cell comprises at least one external hole (300) delimited by the internal periphery of the peripheral wall (91-93) of the cell to create a continuity of substance between the first current rectifying element (8) and the relevant peripheral wall (91-93), and **in that** an air passage corridor exists between two facing transversal walls of two consecutive cells (C,B-B,A).

14. Machine according to Claim 13, **characterized in that** the connector (113) has three bosses (223) for local contact with the bottom face of the dissipator and for creating a gap between the overall plate-form bodies of the dissipator and of the connector.

15. Machine according to any one of the preceding claims, **characterized in that** the hooks (114) are overall bracket-shaped.
